(19) **Europäisches Patentamt / European Patent Office / Office européen des brevets**

(11) **EP 4 715 417 A1**

(12) # EUROPEAN PATENT APPLICATION
published in accordance with Art. 153(4) EPC

(43) Date of publication:
**25.03.2026 Bulletin 2026/13**

(21) Application number: **23943697.5**

(22) Date of filing: **30.06.2023**

(51) International Patent Classification (IPC):
**G01S 5/04** (2006.01)   **G01S 13/66** (2006.01)

(52) Cooperative Patent Classification (CPC):
**G01S 5/04; G01S 13/66**

(86) International application number:
**PCT/JP2023/024322**

(87) International publication number:
**WO 2025/004306 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventors:
• **KOBAYASHI, Yuki**
  **Tokyo 100-8310 (JP)**
• **FUNAKI, Nobutaka**
  **Tokyo 100-8310 (JP)**
• **ITO, Toshihiro**
  **Tokyo 100-8310 (JP)**

(74) Representative: **Pfenning, Meinig & Partner mbB**
**Patent- und Rechtsanwälte**
**An der Frauenkirche 20**
**01067 Dresden (DE)**

(54) **TARGET TRAJECTORY ESTIMATION DEVICE AND TARGET TRAJECTORY ESTIMATION METHOD**

(57)  A target trajectory estimating device includes: an orientation information reading unit (41) to read orientation information indicating an orientation measurement value obtained by each of a plurality of orientation sensors (10) that has received an incoming radio wave from an object target (100) and orientation measurement error information indicating an orientation measurement error accompanying or uniformly set to the orientation measurement value indicated by the orientation information; a time domain dividing unit (43) to divide time when each of the plurality of orientation sensors (10) has observed the object target (100) into a plurality of time domains in time-series order, and divide the orientation information read by the orientation information reading unit (41) for each of the divided time domains; an abnormal value determining unit (44) to perform, for each of the time domains obtained by the time domain dividing unit (43), determination of whether or not an orientation measurement value indicates an abnormal value on the basis of whether a position indicated by an orientation measurement value indicated by each of the plurality of pieces of orientation information present in the plurality of time domains is concentrated at one point or is concentrated around a state vector including a position and a speed, reset an orientation measurement error accompanying the orientation measurement value determined to be an abnormal value to a setting for lowering reliability with respect to trajectory estimation of the orientation measurement value, and reset an orientation measurement error accompanying the orientation measurement value determined not to be an abnormal value without changing reliability for trajectory estimation of the orientation measurement value; a positioning processing unit (45) to estimate, for each of time domains divided by the time domain dividing unit (43), a positioning value for the object target (100) in each of the time domains using the orientation measurement value indicated by the plurality of pieces of orientation information present in the plurality of time domains and a reset orientation measurement error accompanying the orientation measurement value; and an output unit (46) to output object trajectory information indicating a trajectory of the object target (100) by connecting, in time-series order, the positioning values for each of the time domains estimated by the positioning processing unit (45).

EP 4 715 417 A1

# FIG. 1

Target Trajectory Estimation System

Target Trajectory Estimation Device `40`

100

Target Object

Orientation Sensor 1 `10₁`

Orientation Measuring Unit `20₁`

Orientation Sensor 2 `10₂`

Orientation Measuring Unit `20₂`

Orientation Sensor N `10ₙ`

Orientation Measuring Unit `20ₙ`

Storage Device `30`

Storage Unit `31`

Error Setting Unit `42`

Orientation Information Reading Unit `41`

Time Domain Dividing Unit `43`

Abnormal Value Determining Unit `44`

Orientation Information Reading Unit `44a`

Positioning Gate Determining Unit `44b`

Positioning Processing Unit `45`

Reliability Setting Unit `44c`

Output Device `50`

Output Unit `46`

## Description

### TECHNICAL FIELD

The present disclosure relates to a target trajectory estimating device and a target trajectory estimating method for measuring a positioning value of a target.

### BACKGROUND ART

In a target trajectory estimating device that estimates a target trajectory of an airplane or the like on the basis of orientation measurement values obtained by an active sensor such as a plurality of radar sensors or a passive sensor such as a radio wave sensor, there is a technology for calculating a weighted positioning value by setting an orientation measurement error on the basis of reliability of each of the plurality of orientation measurement values.

For example, there is a method of estimating the position and speed of the target and the accuracy thereof while reflecting a difference in orientation measurement time by maximum A posteriori (MAP) estimation on the basis of different orientation measurement errors of a plurality of asynchronous sensors.

Further, for example, Patent Literature 1 discloses a method for performing abnormal value determination at the time of positioning processing for positioning a target in a target trajectory estimating device.

The target trajectory estimating device disclosed in Patent Literature 1 calculates Dilution Of Precision (DOP), which is an index representing positioning accuracy for each sensor set selected from a plurality of sensors, and preferentially sets a sensor to be used for positioning processing.

### CITATION LIST

### PATENT LITERATURE

Patent Literature 1: JP 2016-61705

### SUMMARY OF INVENTION

### TECHNICAL PROBLEM

In the target tracking device disclosed in Patent Literature 1, in a case where a plurality of sensors is present at positions indicating the same orientation with respect to a target, the DOP has a property of decreasing with deterioration in positioning accuracy, and thus it is possible to perform good abnormal value determination at the time of positioning processing.

Meanwhile, when a specific sensor in a sensor set is in a multipath environment, there is a case where many abnormal values are included, and there is a possibility that erroneous positioning processing is performed.

The present disclosure has been made in view of the above points, and an object of the present disclosure is to obtain a target trajectory estimating device that can accurately estimate a target positioning value in a multipath environment, and performs improved trajectory estimation of an object even when a specific sensor is in the multipath environment.

### SOLUTION TO PROBLEM

A target trajectory estimating device according to the present disclosure includes: an orientation information reading unit to read orientation information indicating an orientation measurement value obtained by each of a plurality of orientation sensors that has received an incoming radio wave from a target, and orientation measurement error information indicating an orientation measurement error accompanying to the orientation measurement value indicated by the orientation information or uniformly set; a time domain dividing unit to divide time during which each of the plurality of orientation sensors has observed the target into a plurality of time domains in time-series order, and divide the orientation information read by the orientation information reading unit to a plurality of pieces of orientation information respectively corresponding to the plurality of time domains; an abnormal value determining unit to perform, for each of the plurality of time domains obtained by the time domain dividing unit, determination of whether or not the orientation measurement value indicates an abnormal value on a basis of whether positions indicated by orientation measurement values indicated by the plurality of pieces of orientation information present in the plurality of time domains are concentrated at one point or are concentrated around a state vector including a position and a speed, reset a setting of the orientation measurement error accompanying the orientation measurement value determined to be an abnormal value to a setting for lowering reliability with respect to trajectory estimation of the orientation measurement value, and reset the setting of the orientation measurement error accompanying the orientation measurement value determined not to be the abnormal value to keep the reliability unchanged for the trajectory estimation of the orientation measurement value; a positioning processing unit to estimate, for each of the plurality of time domains obtained by the time domain dividing unit, a positioning value of the target in each of the plurality of time domains using the orientation measurement value indicated by the plurality of pieces of orientation information present in the plurality of time domains and the orientation measurement error which is reset accompanying the orientation measurement value; and an output unit to output object trajectory information indicating a trajectory of the target by connecting, in time-series order, the positioning value for each of the plurality of time domains estimated by the positioning processing unit.

## ADVANTAGEOUS EFFECTS OF INVENTION

According to the present disclosure, even when a specific orientation sensor is in a multipath environment, a target positioning value can be estimated with high accuracy, and trajectory estimation closer to an actual trajectory (true value) of the target can be performed.

## BRIEF DESCRIPTION OF DRAWINGS

FIG. 1 is a block diagram illustrating a schematic configuration of a target trajectory estimating system including a target trajectory estimating device according to a first embodiment.
FIG. 2 is a diagram illustrating orientation measurement values of a plurality of orientation sensors divided in a time domain in the target trajectory estimating device according to the first embodiment.
FIG. 3 is a diagram spatially illustrating orientation measurement values of the plurality of orientation sensors in the target trajectory estimating device according to the first embodiment.
FIG. 4 is a diagram illustrating a normal value and an abnormal value in an orientation measurement value that is a target of positioning gate determination in the target trajectory estimating device according to the first embodiment.
FIG. 5 is a diagram illustrating an abnormal value determination method of positioning gate determination and gates to be used in the target trajectory estimating device according to the first embodiment.
FIG. 6 is a flowchart illustrating an example of an abnormal value determination procedure in the target trajectory estimating device according to the first embodiment.
FIG. 7 is a block diagram illustrating a hardware configuration example of the target trajectory estimating device according to the first embodiment.
FIG. 8 is a block diagram illustrating a schematic configuration of a target trajectory estimating device according to a second embodiment.
FIG. 9 is a flowchart illustrating an example of a procedure from abnormal value determination using a Kalman filter in a time forward direction to tracking processing in the target trajectory estimating device according to the second embodiment.
FIG. 10 is a flowchart illustrating an example of procedures from abnormal value determination using a Kalman filter in a time reverse direction to tracking processing in the target trajectory estimating device according to the second embodiment.

## DESCRIPTION OF EMBODIMENTS

First Embodiment

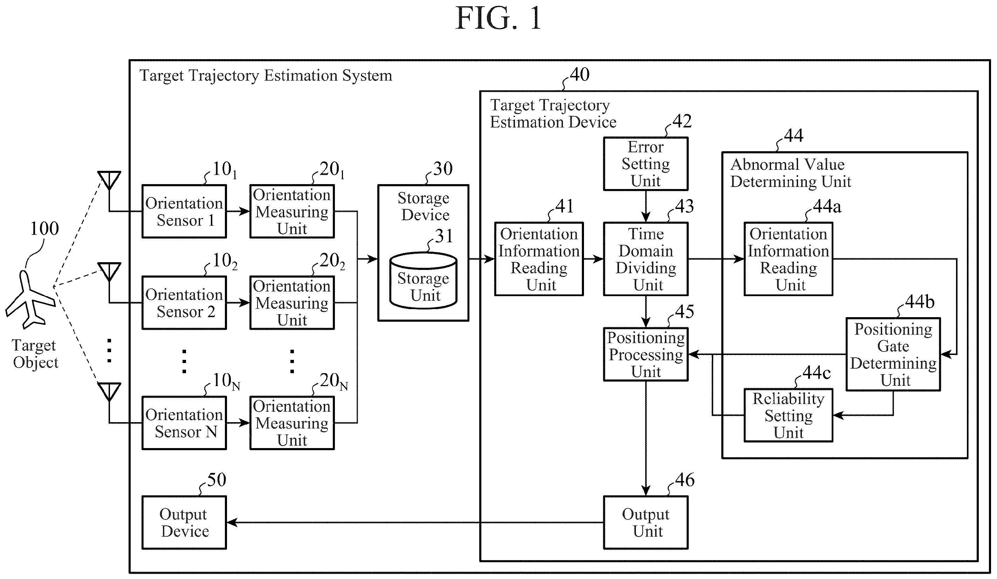

A target trajectory estimating device according to a first embodiment will be described with reference to FIGS. 1 to 7.
FIG. 1 is a block diagram illustrating a schematic configuration of a target trajectory estimating system including a target trajectory estimating device according to the first embodiment.
As illustrated in FIG. 1, the target trajectory estimating system includes a plurality of orientation sensors $10_1$ to $10_N$, a plurality of orientation measuring units $20_1$ to $20_N$, a storage device 30, a target trajectory estimating device 40, and an output device 50.
The target trajectory estimating device 40 according to the first embodiment uses only orientation measurement values of the plurality of orientation sensors $10_1$ to $10_N$, measures a position without acquiring distance data, and estimates a trajectory of a target such as an airplane.
In a case where it is not necessary to individually describe the subscripts N attached to the orientation sensor 10 and the orientation measuring unit 20, the description will be made below without adding subscripts in order to avoid complication of the description.

A plurality of (N) orientation sensors 10 is disposed in a connected manner, receives a signal from a target 100 such as an airplane, and obtains orientation information thereof.

Each orientation sensor 10 is a passive sensor such as a radio wave sensor that receives a radio wave transmitted from the target 100.

The plurality of orientation sensors 10 has the same configuration.

Note that each orientation sensor 10 may be an active sensor such as a radar sensor that outputs a signal and receives a signal that hits the target 100 and is reflected.

Further, each orientation sensor 10 may be a sensor that can sense and receive a physical quantity such as a sound wave or heat emitted from the target 100 and estimate the direction of the target 100.

A measurement error of each orientation sensor 10 may be different depending on each orientation sensor 10, or may be different depending on the measurement time.

Each of the plurality of (N) orientation measuring units 20 measures an orientation on the basis of a reception signal received by the corresponding orientation sensor 10, and outputs a measurement result as orientation information indicating an orientation measurement value.

Each of the plurality of orientation measuring units 20 analyzes a reception signal corresponding to each of the N orientation sensors 10 connected to each other, and measures an arrival orientation $(\theta_k, \varphi_k)$ of an incoming radio wave from the target 100 as an orientation measurement value.

In addition, each of the plurality of orientation measuring units 20 associates a measurement time $t_k$ and position information $(x^r_k, y^r_k, z^r_k)$ of the corresponding orientation sensor 10 with the orientation measurement value $(\theta_k, \varphi_k)$ as information accompanying the orientation measurement value, and outputs the associated information as orientation information indicating the orientation measurement value. The orientation information is digital information.

Note that k is an orientation measurement value number and is an integer of 1 to K (> 1) for specifying the measurement time $t_k$.

The orientation measurement value number k is a number assigned in time-series order to all asynchronous orientation measurement values while the plurality of (N) orientation sensors 10 observes the target 100, and is assumed to be K.

Further, in the position information, x, y, and z represent an x coordinate, a y coordinate, and a z coordinate, and r is an integer of 1 to N for specifying the orientation sensor 10.

Each of the plurality of orientation measuring units 20 outputs, as orientation measurement error information, an orientation measurement error $(\sigma_{\theta,k}, \sigma_{\varphi,k})$ in a non-multipath environment analyzed from an antenna configuration and a signal-to-noise ratio (SNR) of the corresponding orientation sensor 10. The orientation measurement error $(\sigma_{\theta,k}, \sigma_{y,k})$ accompanies the corresponding orientation measurement value $(\theta_k, \varphi_k)$. The orientation measurement error information is digital information.

That is, while each of the plurality of orientation sensors 10 observes the target 100, each of the plurality of orientation sensors 10 receives K incoming radio waves from the target 100 in time-series order, and the plurality of orientation measuring units 20 obtains K orientation measurement values $(\theta_k, \varphi_k)$ and orientation measurement errors $(\sigma_{\theta,k}, \sigma_{\varphi,k})$ with respect to the target 100.

The storage device 30 stores orientation information from each of a plurality of (N) orientation measuring units 20 in a storage unit 31.

While each of the plurality of orientation sensors 10 observes the target 100, the storage device 30 accumulates orientation information indicating an orientation measurement value $(\theta_k, \varphi_k)$ and orientation measurement error information indicating an orientation measurement error $(\sigma_{\theta,k}, \sigma_{\varphi,k})$ from each of the plurality of orientation measuring units 20 sent in time-series order in the storage unit 310, and outputs the orientation information and the orientation measurement error information stored at the time of target trajectory estimation.

The target trajectory estimating device 40 estimates the trajectory of the target 100 such as an airplane on the basis of the orientation measurement value $(\theta_k, \varphi_k)$ based on the orientation information received by the plurality of orientation sensors 10, the reset orientation measurement error $(\sigma_{\theta,k}, \sigma_{\varphi,k})$, the position information $(x^r_k, y^r_k, z^r_k)$ of the orientation sensors 10, and a representative time $t_m$.

In particular, the target trajectory estimating device 40 is a device having a high probability of being able to estimate the trajectory of the target 100 with high accuracy even under an environment in which some of the plurality of orientation sensors 10 do not indicate the orientation of the target 100, that is, in a so-called multipath environment.

The target trajectory estimating device 40 acquires the orientation measurement value $(\theta_k, \varphi_k)$ and the orientation measurement error $(\sigma_{\theta,k}, \sigma_{\varphi,k})$ indicated by the K pieces of orientation information from the plurality of orientation measuring units 20 accumulated in the storage device 30, the position information $(x^r_k, y^r_k, z^r_k)$ of the orientation sensor 10, and the measurement time $t_k$, calculates a positioning value $x_m$ of the representative time $t_m$ for each of a plurality of time domains m obtained by dividing in time-series order a time during which each of the plurality of orientation sensors 10 has observed the target 100, estimates a trajectory of the target 100 obtained by connecting the positioning values $x_m$ of the representative time $t_m$ in time-series order, and outputs the trajectory as the object trajectory information.

While each of the plurality of orientation sensors 10 observes the target 100, the target trajectory estimating device 40 performs recursive processing of estimating a trajectory on the basis of an orientation measurement value in a certain time domain to obtain object trajectory information.

The output device 50 displays the estimated trajectory of the target 100 obtained from the object trajectory information from the target trajectory estimating device 40.

The target trajectory estimating device 40 includes an orientation information reading unit 41, an error setting unit 42, a time domain dividing unit 43, an abnormal value determining unit 44, a positioning processing unit 45, and an output unit 46.

The orientation information reading unit 41 reads orientation information indicating the orientation measurement value $(\theta_k, \varphi_k)$ from the plurality of orientation measuring units 20 stored in the storage device 30, and orientation measurement error information $(\sigma_{\theta,k}, \sigma_{\varphi,k})$ indicating an orientation measurement error $(\sigma_{\theta,k}, \sigma_{\varphi,k})$ stored in the storage device 30.

The orientation information reading unit 41 also reads the position information $(x^r_k, y^r_k, z^r_k)$ of the orientation sensor 10 and the measurement time $t_k$ accompanying the orientation measurement value $(\theta_k, \varphi_k)$ stored in the storage device 30.

In a case where the orientation measurement error information indicating the orientation measurement error $(\sigma_{\theta,k}, \sigma_{\varphi,k})$ is not obtained by each of the plurality of orientation measuring units 20 and is not stored in the storage device 30, the error setting unit 42 uniformly sets the orientation measurement error $(\sigma_{\theta,k}, \sigma_{\varphi,k})$ accompanying the orientation measurement values indicated by the orientation information read by the orientation information reading unit 41 from the plurality of orientation measuring units 20.

An orientation measurement error $(\sigma_{\theta,k}, \sigma_{\varphi,k})$ accompanying the orientation measurement value $(\theta_k, \varphi_k)$ set by the error setting unit 42 is read by the orientation information reading unit 41.

When each of the plurality of orientation measuring units 20 outputs orientation measurement error information indicating the orientation measurement error $(\sigma_{\theta,k}, \sigma_{\varphi,k})$, each of the plurality of orientation measuring units 20 functions as the error setting unit 42.

The orientation information reading unit 41 reads the orientation information indicating the orientation measurement value $(\theta_k, \varphi_k)$ from the plurality of orientation measuring units 20 accumulated in the storage device 30 in the time during which each of the plurality of orientation sensors 10 has observed the target 100, and the orientation information indicating the measurement time $t_k$ accompanying and associated with the orientation measurement value $(\theta_k, \varphi_k)$ and the position information $(x^r_k, y^r_k, z^r_k)$ of each of the orientation sensors 10.

At this time, the orientation measurement error information indicating the orientation measurement error $(\sigma_{\theta,k}, \sigma_{\varphi,k})$ accumulated in the storage device 30 in the time during which each of the plurality of orientation sensors 10 has observed the target 100, or the orientation measurement error $(\sigma_{\theta,k}, \sigma_{\varphi,k})$ accompanying the orientation measurement value $(\theta_k, \varphi_k)$ uniformly set by the error setting unit 42 is also read.

The time domain dividing unit 43 divides the orientation information indicating orientation measurement values $(\theta_k, \varphi_k)$ from the plurality of orientation measuring units 20 read by the orientation information reading unit 41 into pieces of orientation information respectively each corresponding to a set time domain. The set time domain is a short time domain.

The time domain dividing unit 43 divides the time during which each of the plurality of orientation sensors 10 has observed the target 100 into a plurality of time domains in time-series order, and divides the orientation information read by the orientation information reading unit 41 for each divided time domain.

The time domain dividing unit 43 divides, into M pieces, the orientation information indicating the orientation measurement value $(\theta_k, \varphi_k)$ and the orientation measurement error $(\sigma_{\theta,k}, \sigma_{\varphi,k})$ accompanying the orientation measurement value $(\theta_k, \varphi_k)$, the measurement time $t_k$, and the position information $(x^r_k, y^r_k, z^r_k)$ of each orientation sensor 10, which are read by the orientation information reading unit 41 on the basis of radio waves from the target 100 received by the plurality of orientation sensors 10 on the basis of the measurement time $t_k$, and accumulated in the storage device 30, according to a set constant time interval.

Each time domain divided into M time domains is m, and a representative time of each time domain m is $t_m$.

In addition, in the time domain m, the first orientation measurement value number is $k_{m,s}$, and the last orientation measurement value number is $k_{m,e}$ among orientation measurement value numbers k added in time-series order to the orientation information and the orientation measurement error information for the radio waves from the target 100 received by each orientation sensor 10.

For example, it means that orientation information indicating K orientation measurement values $(\theta_k, \varphi_k)$ measured while the orientation sensor $10_1$ observes the target 100 is divided into M pieces of orientation information at equal time intervals in time-series order, an orientation measurement value number of $k_{m,s}$ is assigned to the first orientation information in the m-th divided orientation information, and an orientation measurement value number of $k_{m,e}$ is assigned to the last orientation information.

The position information $(x^1_k, y^1_k, z^1_k)$ and the orientation measurement error information indicating the orientation measurement error $(\sigma_{\theta,k}, \sigma_{\varphi,k})$ of the orientation sensor $10_1$ accompany the corresponding orientation measurement value $(\theta_k, \varphi_k)$ even if the orientation measurement value $(\theta_k, \varphi_k)$ is divided into M pieces at equal intervals in time-series order.

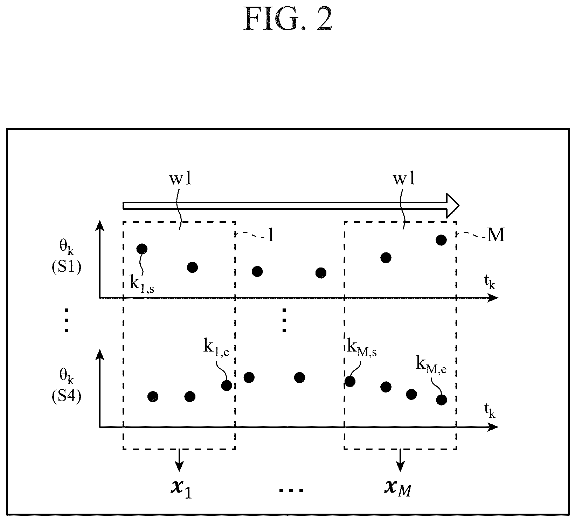

Now, for a case where there are four orientation sensors 10, an example in which the time domain dividing unit 43 divides the orientation information indicating the orientation measurement values into M time domains m at equal intervals at time intervals W1 in time-series order will be described with reference to FIG. 2.

In FIG. 2, $\theta_k$ (s1) represents the orientation measurement value $\theta_k$ of the orientation information based on the radio wave received by the first orientation sensor $10_1$, $\theta_k$ (s4) represents the orientation measurement value $\theta_k$ of the orientation information based on the radio wave received by the fourth orientation sensor $10_4$, and 1 to M represent the first to M-th time domains.

Further, representatively, $k_{1,s}$ represents the orientation measurement value $\theta_k$ of the first orientation information by the radio wave received by the first orientation sensor $10_1$ in the time domain 1, $k_{1,e}$ represents the orientation measurement value $\theta_k$ of the last orientation information by the radio wave received by the fourth orientation sensor $10_4$ in the time domain 1, $k_{M,s}$ represents the orientation measurement value $\theta_k$ of the first orientation information by the fourth orientation sensor $10_4$ in the time domain M, and $k_{m,e}$ represents the orientation measurement value $\theta_k$ of the last orientation information by the radio wave received by the fourth orientation sensor $10_4$ in the time domain M.

As described above, the time domain dividing unit 43 divides the orientation information indicating the orientation measurement value $(\theta_k, \varphi_k)$ by the radio wave received by each orientation sensor 10 into M time domains m at equal intervals at the time interval W1 in time-series order, and divides the K orientation measurement values $(\theta_k, \varphi_k)$ for each orientation sensor 10 and for each time domain m in time-series order.

Note that, as illustrated in FIG. 2, in one time domain m for one orientation sensor 10, there may be a plurality of orientation measurement values $(\theta_k, \varphi_k)$, or there may be a time domain m in which no orientation measurement value $(\theta_k, \varphi_k)$ is present or in which one orientation measurement value $(\theta_k, \varphi_k)$ is present.

The abnormal value determining unit 44 determines an abnormality of the orientation measurement value $(\theta_k, \varphi_k)$ present for each set time domain m, the orientation measurement value $(\theta_k, \varphi_k)$ being divided for each time domain m set by the time domain dividing unit 43, sets reliability based on the determined abnormality, and obtains reliability information.

The abnormal value determining unit 44 determines whether or not the orientation measurement value $(\theta_k, \varphi_k)$ present for each time domain m set by the time domain dividing unit 43 indicates an abnormal value, sets again the orientation measurement error $(\sigma_{\theta,k}, \sigma_{\varphi,k})$ accompanying the orientation measurement value $(\theta_k, \varphi_k)$ determined to be an abnormal value, and performs processing of lowering reliability of the orientation measurement value $(\theta_k, \varphi_k)$ determined to be an abnormal value and lowering reliability with respect to trajectory estimation of the orientation measurement value $(\theta_k, \varphi_k)$ determined to be an abnormal value in positioning processing of calculating a positioning value.

On the other hand, the abnormal value determining unit 44 maintains without change the orientation measurement error $(\sigma_{\theta,k}, \sigma_{\varphi,k})$ accompanying the orientation measurement value $(\theta_k, \varphi_k)$ for which it is determined that the orientation measurement value $(\theta_k, \varphi_k)$ is not an abnormal value, maintains without change the reliability of the orientation measurement value $(\theta_k, \varphi_k)$ for which it is determined that the orientation measurement value is not an abnormal value, and maintains without change the reliability of the orientation measurement value $(\theta_k, \varphi_k)$ for which it is determined that the orientation measurement value is an abnormal value with respect to trajectory estimation.

Note that the positioning processing for calculating the positioning value may be generally known processing.

For each time domain m divided by the time domain dividing unit 43, the abnormal value determining unit 44 determines whether or not the orientation measurement value $(\theta_k, \varphi_k)$ present in the time domain m indicates the orientation of the target 100, determines that the orientation measurement value $(\theta_k, \varphi_k)$ is an abnormal value when the orientation measurement value $(\theta_k, \varphi_k)$ does not indicate the orientation of the target 100, sets again the orientation measurement error $(\sigma_{\theta,k}, \sigma_{\varphi,k})$ accompanying the orientation measurement value $(\theta_k, \varphi_k)$ determined to be an abnormal value, and as a result, performs processing of lowering reliability with respect to the trajectory estimation of the orientation measurement value $(\theta_k, \varphi_k)$ determined to be an abnormal value.

The abnormal value determining unit 44 maintains without change the orientation measurement error $(\sigma_{\theta,k}, \sigma_{\varphi,k})$ accompanying the orientation measurement value $(\theta_k, \varphi_k)$ for which it is determined that the orientation measurement value $(\theta_k, \varphi_k)$ is not an abnormal value, and maintains without change the reliability of the orientation measurement value $(\theta_k, \varphi_k)$ determined not to be an abnormal value with respect to trajectory estimation.

In short, the abnormal value determining unit 44 determines whether or not the orientation measurement value $(\theta_k, \varphi_k)$ present in the time domain m indicates an abnormal value for each time domain m divided by the time domain dividing unit 43, resets the orientation measurement error $(\sigma_{\theta,k}, \sigma_{\varphi,k})$ accompanying the orientation measurement value $(\theta_k, \varphi_k)$ determined to be an abnormal value to the setting for lowering the reliability with respect to the trajectory estimation of the orientation measurement value $(\theta_k, \varphi_k)$, and resets the orientation measurement error accompanying the orientation measurement value $(\theta_k, \varphi_k)$ determined not to be an abnormal value without changing the reliability with respect to the trajectory estimation of the orientation measurement value $(\theta_k, \varphi_k)$.

For each time domain m divided by the time domain dividing unit 43, the positioning processing unit 45 performs positioning processing of calculating a positioning value using the orientation measurement value ($\theta_k$, $\varphi_k$) indicated by the orientation information, the orientation measurement error ($\sigma_{\theta,k}$, $\sigma_{\varphi,k}$) reset by the abnormal value determining unit 44 accompanying the orientation measurement value ($\theta_k$, $\varphi_k$), the measurement time $t_k$, and the position information ($x^r_k$, $y^r_k$, $z^r_k$) of the orientation sensor 10, obtains a positioning value for the target 100 in the time domain m, and obtains target position information indicating a positioning value of the target 100 in the time domain m.

For each time domain m divided by the time domain dividing unit 43, the positioning processing unit 45 performs positioning processing of calculating a positioning value $x_m$ using a plurality of orientation measurement values ($\theta_k$, $\varphi_k$) defined by an orientation measurement value number k from $k_{m,s}$ indicating a first orientation measurement value number to $k_{m,e}$ indicating a last orientation measurement value number present in the time domain m, a plurality of orientation measurement errors ($\sigma_{\theta,k}$, $\sigma_{\varphi,k}$), the measurement time $t_k$, and the position information ($x^r_k$, $y^r_k$, $z^r_k$) of the orientation sensor 10, and obtains the positioning value $x_m$ as a state at the representative time $t_m$ representing the time domain m.

Note that the positioning processing for calculating the positioning value $x_m$ may be a generally known process.

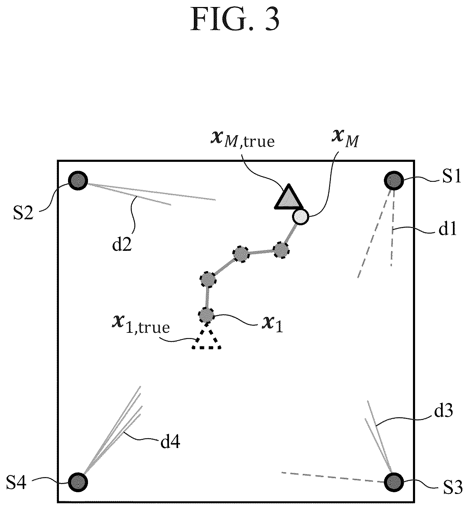

Now, a concept of obtaining a positioning value $x_M$ in the time domain M in a case where four orientation sensors 10 are used as the orientation sensors 10 that obtain the positioning values $x_M$ of the target 100 from the N orientation sensors 10 will be described with reference to FIG. 3. The number of orientation sensors 10 is not limited to four.

In FIG. 3, S1 to S4 indicate the first orientation sensor $10_1$ to the fourth orientation sensor $10_4$, and a line segment d1 to a line segment d4 extending from each of the first orientation sensor S1 to the fourth orientation sensor S4 indicate the orientation measurement value $\theta_k$ of each of the first orientation sensor S1 to the fourth orientation sensor $10_4$ being present in the time domain M. $x_{M,true}$ indicates the position of the target 100 in the time domain M.

That is, when the orientation measurement value $\theta_k$ indicates the true value $x_{M,true}$ or a value close to the true value $x_{M,true}$, the orientation measurement value $\theta_k$ is a normal value.

In FIG. 3, the line segment d4 is a normal value indicating the orientation (true value $x_{M,true}$) of the target 100 in the time domain M, whereas the line segment d1 is an abnormal value that does not indicate the orientation (position) of the target 100 due to the multipath environment.

In the state illustrated in FIG. 3, the abnormal value determining unit 44 determines that the orientation measurement value ($\theta_k$, $\varphi_k$) by the radio wave received by the first orientation sensor $10_1$ is an abnormal value, sets again the orientation measurement error ($\sigma_{\theta,k}$, $\sigma_{\varphi,k}$) accompanying the orientation measurement value ($\theta_k$, $\varphi_k$) determined to be an abnormal value, and lowers the reliability with respect to the trajectory estimation of the orientation measurement value ($\theta_k$, $\varphi_k$) determined to be an abnormal value.

On the other hand, in the state illustrated in FIG. 3, the abnormal value determining unit 44 determines that the orientation measurement value ($\theta_k$, $\varphi_k$) obtained by the radio wave received by the fourth orientation sensor $10_4$ is a normal value, and maintains the orientation measurement error ($\sigma_{\theta,k}$, $\sigma_{\varphi,k}$) without change and maintains the reliability of the trajectory estimation of the orientation measurement value ($\theta_k$, $\varphi_k$) determined as a normal value without change.

That is, the abnormal value determining unit 44 lowers the reliability for the orientation measurement value ($\theta_k$, $\varphi_k$) determined to be an abnormal value.

As a result, the positioning processing unit 45 performs the positioning processing of calculating a positioning value using the orientation measurement value ($\theta_k$, $\varphi_k$) obtained by the radio wave received by each of the first orientation sensor $10_1$ to the fourth orientation sensors $10_4$ and the orientation measurement error ($\sigma_{\theta,k}$, $\sigma_{\varphi,k}$) reset by the abnormal value determining unit 44 accompanying the orientation measurement value ($\theta_k$, $\varphi_k$), obtains the positioning value $x_m$ that is an estimated position of the target 100 in the time domain m, and obtains target position information indicating the positioning value $x_m$ of the target 100 in the time domain m, that is, the representative time $t_m$.

In the positioning processing of calculating the positioning value at this time, reliability of the orientation measurement error ($e_{\theta,k}$, $\sigma_{\varphi,k}$) accompanying the orientation measurement value ($\theta_k$, $\varphi_k$) by the radio wave received by the first orientation sensor $10_1$ is lowered, so that it is possible to suppress an influence of the orientation measurement value ($\theta_k$, $\varphi_k$) by the radio wave received by the first orientation sensor $10_1$ in the positioning process, and the positioning value $x_m$ indicating the estimated position of the target 100 obtained by the positioning processing unit 45 is obtained as a value close to the true value $x_{M,true}$ of the target 100.

In this way, as illustrated in FIG. 2, the positioning processing unit 45 obtains from the positioning value $x_1$ to the positioning value $x_M$ at the representative time $t_m$ from the time domain 1 to the time domain M.

The output unit 46 connects all the positioning values $x_1$ to $x_M$ at the representative time $t_m$ from the time domain 1 to the time domain M indicating the estimated position of the target 100 obtained by the positioning processing unit 45 in time-series order as illustrated in FIG. 3, and outputs them to the output device 50 as object trajectory information indicating the estimated trajectory of the target 100.

The output device 50 is a device that uses the object trajectory information from the output unit 46, and is, for example, a display that displays the trajectory of the object on the basis of the object trajectory information.

As illustrated in FIG. 1, the abnormal value determining unit 44 includes an orientation information reading unit 44a, a positioning gate determining unit 44b, and a reliability setting unit 44c.

The orientation information reading unit 44a reads, in time-series order, the orientation information indicating the orientation measurement value $(\theta_k, \varphi_k)$ for the radio wave from the target 100 received by the plurality of orientation sensors 10, the orientation measurement error information indicating the orientation measurement error $(\sigma_{\theta,k}, \sigma_{\varphi,k})$ accompanying the orientation measurement value $(\theta_k, \varphi_k)$ indicated by the orientation information, the measurement time $t_k$, and the position information $(x^r_k, y^r_k, z^r_k)$ of the orientation sensor 10, which are present for each time domain m set by the time domain dividing unit 43.

Although the orientation information reading unit 44a is described as a functional unit for convenience of description, the orientation information that is read by the orientation information reading unit 41 and divided for each time domain m in time-series order by the time domain dividing unit 43 and indicates the orientation measurement value $(\theta_k, \varphi_k)$ for the radio wave from the target 100 received by the plurality of orientation sensors 10, the orientation measurement error information indicating the orientation measurement error $(\sigma_{\theta,k}, \sigma_{\varphi,k})$ accompanying the orientation measurement value $(\theta_k, \varphi_k)$ indicated by the orientation information, the measurement time $t_k$, and the position information $(x^r_k, y^r_k, z^r_k)$ of the orientation sensor 10 are directly used by the positioning gate determining unit 44b.

The positioning gate determining unit 44b is processing of determining, for each of the plurality of orientation sensors 10, an abnormal value of the orientation measurement value $(\theta_k, \varphi_k)$ indicated by each of the plurality of pieces of orientation information present in the plurality of time domains m using a positioning gate based on a temporary positioning value and temporary positioning accuracy for each time domain m.

The processing of determining whether or not the orientation measurement value $(\theta_k, \varphi_k)$ by the positioning gate determining unit 44b indicates an abnormal value is processing of determining whether the orientation measurement value $(\theta_k, \varphi_k)$ is an abnormal value or a normal value on the basis of whether the position indicated by the orientation measurement value $(\theta_k, \varphi_k)$ by the radio wave received by each of the plurality of orientation sensors 10 present in the time domain m is concentrated at one point, that is, indicates the only position, or whether the orientation measurement value $(\theta_k, \varphi_k)$ is concentrated around a state vector including the position and the speed in a case where the result of the positioning processing includes a speed component.

In the determination by the positioning gate determining unit 44b as to whether the orientation measurement value $(\theta_k, \varphi_k)$ is an abnormal value or a normal value, reliability is evaluated by selecting a plurality of orientation sensors from the N orientation sensors 10 and determining whether the orientation measurement values $(\theta_k, \varphi_k)$ by the plurality of orientation sensors of each set of classified sensor sets are present in the positioning site, the magnitude of the variance between the temporary positioning values is defined as the abnormality of the positioning in the time domain for each sensor set having the evaluated high reliability, and a time domain in which the abnormality is continuously lower than the set value is defined as a normal time domain, and a time domain in which the abnormality is continuously longer than the set value is defined as an abnormal time domain.

Note that a time domain having the lowest abnormality may be set as a normal time domain.

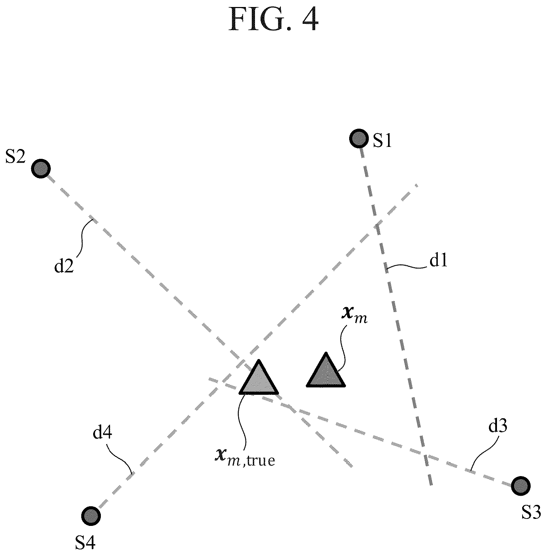

With reference to FIG. 4, a concept of processing of determining whether it is an abnormal value or a normal value by the positioning gate determining unit 44b in a case where four orientation sensors 10 are selected from the N orientation sensors 10 as the orientation sensors 10 for obtaining the estimated position of the target 100 will be described. The number of orientation sensors 10 is not limited to four.

In FIG. 4, S1 to S4 indicate the first orientation sensor $10_1$ to the fourth orientation sensor $10_4$, and a line segment d1 to a line segment d4 by broken lines extending from each of the first orientation sensor S1 to the fourth orientation sensor S4 indicate the orientation measurement value $\theta_k$ of each of the first orientation sensor S1 to the fourth orientation sensor $10_4$ being present in the time domain m. $x_{m,true}$ indicates the position of the target 100 in the time domain m.

In addition, as a premise, it is assumed that the orientation measurement error $(\sigma_{\theta,k}, \sigma_{\varphi,k})$ accompanying the orientation measurement value $(\theta_k, \varphi_k)$ by radio waves received by the first orientation sensor S1 to the fourth orientation sensor S4 are set equal to each other.

Positioning processing is performed using the orientation measurement value $(\theta_k, \varphi_k)$ based on radio waves received by each of the first orientation sensor S1 to the fourth orientation sensor S4, the orientation measurement error $(\sigma_{\theta,k}, \sigma_{\varphi,k})$ accompanying the orientation measurement value, the measurement time $t_k$, and the position information $(x^r_k, y^r_k, z^r_k)$ of each of the orientation sensors 10 to obtain the positioning value $x_m$ of the target 100.

For example, when the orientation measurement value $\theta_k$ indicated by the line segment d2 and the orientation measurement value $\theta_k$ indicated by the line segment d3 are close to primary dependency, both the orientation measurement value $\theta_k$ indicated by the line segment d1 and the orientation measurement value $\theta_k$ indicated by the line segment d4 are trusted by the same amount to calculate the positioning value $x_m$, and thus the distance at which the positioning value $x_m$ is separated from the true value $x_{M,true}$ is largely separated from the true value $x_{M,true}$.

That is, the positioning value $x_m$ of the target 100 is away from the true value $x_{M,true}$ of the target 100 due to the influence of the orientation measurement value $\theta_k$ indicated by the line segment d1.

On the other hand, when it is trusted that the position indicated by the orientation measurement value $(\theta_k, \varphi_k)$ is concentrated at the only position or that the target 100 is present in the state vector, the position where it is reliable that the target 100 is present in FIG. 4 is a position around the true value $x_{M,true}$ at which the orientation measurement value $\theta_k$

indicated by the line segment d2, the orientation measurement value $\theta_k$ indicated by the line segment d3, and the orientation measurement value $\theta_k$ indicated by the line segment d4 are concentrated.

Therefore, the orientation measurement value $\theta_k$ indicated by the line segment d1 can be determined to be an abnormal value.

The positioning gate determining unit 44b resets the orientation measurement error ($\sigma_{\theta,k}$, $\sigma_{\varphi,k}$) accompanying the orientation measurement value $\theta_k$ indicated by the line segment d1 determined to be an abnormal value in such a manner that contribution in the positioning processing for calculating the positioning value decreases.

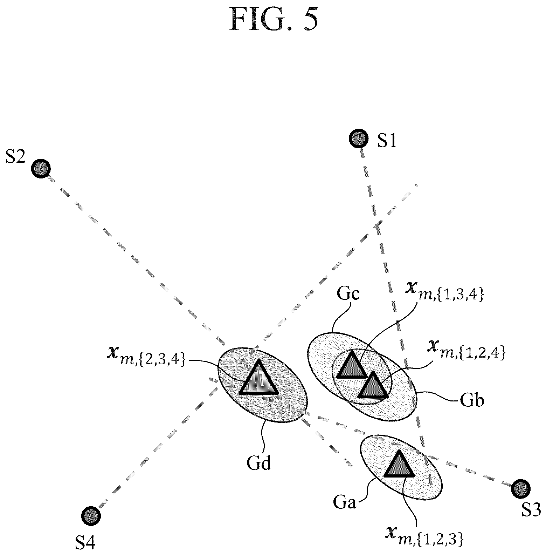

Next, determination processing of an abnormal value by the positioning gate determining unit 44b will be described with reference to FIG. 5.

Now, a case where the estimated position of the target 100 is obtained from the N orientation sensors 10, that is, four orientation sensors 10 are selected for performing the determination processing of the abnormal value will be described. The number of orientation sensors 10 is not limited to four.

In FIG. 5, S1 to S4 indicate the first orientation sensor $10_1$ to the fourth orientation sensor $10_4$, and the line segment d1 to the line segment d4 by broken lines extending from each of the first orientation sensor S1 to the fourth orientation sensor S4 indicate the orientation measurement value $\theta_k$ of each of the first orientation sensor S1 to the fourth orientation sensor $10_4$ being present in the time domain m.

The positioning gate determining unit 44b performs the following processing.

First, a certain number of orientation sensors, in this example, three orientation sensors, from the first orientation sensor S1 to the fourth orientation sensor S4, are selected and classified. For example, the selected orientation sensors are classified into a set (referred to as a first set) of the orientation sensors S1, S2, and S3, a set (referred to as a second sensor set) of the orientation sensors S1, S2, and S4, a set (referred to as a third sensor set) of the orientation sensors S1, S3, and S4, and a set (referred to as a fourth sensor set) of orientation sensors S2, S3, and S4.

Second, in each of the first to fourth sensor sets, for each time domain m divided by the time domain dividing unit 43, generally known positioning processing of calculating a positioning value for the orientation measurement value ($\theta_k$, $\varphi_k$) by the radio wave received by the orientation sensor S in each set is performed to estimate a temporary positioning value $x_{m,\{1,2,3\}}$, a temporary positioning value $x_{m,\{1,2,4\}}$, a temporary positioning value $x_{m,\{1,3,4\}}$, a temporary positioning value $x_{m,\{2,3,4\}}$, a temporary positioning accuracy $R_{m,\{1,2,3\}}$, a temporary positioning accuracy $R_{m,\{1,2,4\}}$, a temporary positioning accuracy $R_{m,\{1,3,4\}}$, and a temporary positioning accuracy $R_{m,\{2,3,4\}}$.

Third, in each sensor set, each of the positioning gates Ga to Gd determined by the estimated corresponding temporary positioning value $x_{m,\{1,2,3\}}$, temporary positioning value $x_{m,\{1,2,4\}}$, temporary positioning value $x_{m,\{1,3,4\}}$, and temporary positioning value $x_{m,\{2,3,4\}}$ is set for each time domain m.

For each time domain m, it is determined whether or not the orientation measurement value ($\theta_k$, $\varphi_k$) by the radio wave received by each of the first orientation sensor S1 to the fourth orientation sensor S4 is present in the positioning gates Ga to Gd.

Fourth, positioning gate determination of the orientation measurement value is performed in such a manner that, in each sensor set, the reliability of the orientation measurement value ($\theta_k$, $\varphi_k$) by each sensor set is evaluated on the basis of determination of whether or not the orientation measurement value ($\theta_k$, $\varphi_k$) is present in the corresponding positioning gates Ga to Gd for each time domain m, and as a result of the evaluation, when reliability of a temporary positioning value $x_{m,Ai}$ is high, that is, when the orientation measurement value ($\theta_k$, $\varphi_k$) of each sensor set is present in each of the positioning gates Ga to Gd, the coincidence of the orientation measurement is recognized, the orientation measurement value ($\theta_k$, $\varphi_k$) in which the coincidence is recognized is determined as a normal value, and the orientation measurement value ($\theta_k$, $\varphi_k$) in which the coincidence is not recognized in all the sensor sets is determined as an abnormal value.

In short, the positioning gate determining unit 44b selects a certain number of orientation sensors S1 to S4, three orientation sensors as an example, from the plurality of orientation sensors S1 to S4, classifies the orientation sensors into a plurality of sensor sets, estimates a temporary positioning value for each time domain m divided by the time domain dividing unit 43 in each of the plurality of sensor sets, sets positioning gates G1 to G4 determined by the estimated temporary positioning value, determines the orientation measurement value ($\theta_k$, $\varphi_k$) indicated by each of the plurality of pieces of orientation information present in the plurality of time domains m as a normal value when it is present in the set positioning gates G1 to G4, and determines the orientation measurement value ($\theta_k$, $\varphi_k$) indicated by each of the plurality of pieces of orientation information present in the plurality of time domains m as an abnormal value when it is not present in any of the set positioning gates G1 to G4.

The positioning gate determination by the positioning gate determining unit 44b will be described below using mathematical formulas.

Now, it is assumed that the number of orientation sensors 10 capable of observing the target 100 is N, a set of a plurality of numbered orientation sensors 10 used for positioning in the time domain m is U = {1, 2,..., N}, and a set of orientation measurement value numbers k for specifying the measurement time $t_k$ in the time domain m is $S_m$ = {$k_{m,s}$, ... , $k_{m,e}$}.

The orientation measurement value number k has a one-to-one correspondence with the orientation measure-

ment value $(\theta_k, \varphi_k)$ at the measurement time $t_k$. $k_{m,s}$ corresponds to the orientation measurement value $(\theta_k, \varphi_k)$ of the first orientation information in the time domain m, and $k_{m,e}$ corresponds to the orientation measurement value $(\theta_k, \varphi_k)$ of the first orientation information in the time domain m.

There are $_NC_3$ combinations as combinations when three orientation sensors 10 are selected from the set U.

When a sensor set selected at this time is $A_i$ (i = 1, 2,..., I) (I = $_NC_3$), a combination of sensors is expressed by the following Formula (1).

$$A_1 = \{1, 2, 3\}, A_2 = \{1, 2, 4\},.., A_I = \{N - 2, N - 1, N\}$$
$$\ldots (1)$$

A set of orientation measurement value numbers k present in the m-th time domain of the sensor set $A_i$ is set as $S_{m,Ai}$, and the orientation measurement value numbers k in the set $S_{m,Ai}$ are expressed by the following Formula (2) in time-series order.

$$k = k_{(m,Ai),s},..., k_{(m,Ai),e} \ldots (2)$$

That is, the above Formula (2) expresses the orientation measurement value number k as $k_{m,Ai}$ orientation measurement values.

When the orientation measurement value number k is represented by the above Formula (2), in the set represented by the following Formula (3), covering of the orientation measurement value number as represented by the following Formula (4) is present in the sets with each other.

$$\left\{ S_{m,A_i} \right\}_{i=1}^{I} \qquad\qquad \cdots (3)$$

$$S_{m,A_1} = \left\{ k_{(m,A_1),s}, \ldots, k_{(m,A_1),e} \right\}, S_{m,A_2} = \left\{ k_{(m,A_2),s}, \ldots, k_{(m,A_2),e} \right\},$$

$$\ldots, S_{m,A_I} = \left\{ k_{(m,A_I),s}, \ldots, k_{(m,A_I),e} \right\} \qquad\qquad \cdots (4)$$

In the positioning gate by the positioning gate determining unit 44b, first, the temporary positioning value $x_{m,Ai}$ and the temporary positioning accuracy $R_{m,Ai}$ used for the representative time $t_{m,Ai}$ represented by the following Formula (5) in the time domain m are obtained by performing generally known positioning processing of calculating a positioning value using the orientation measurement value $(\theta_k, \varphi_k)$ of the sensor set $A_i$.

$$t_{m,A_i} = \sum_{k=k_{(m,A_i),s}}^{k_{(m,A_i),e}} \frac{t_k}{K_{m,A_i}} \qquad\qquad \cdots (5)$$

In the sensor set $A_i$, the temporary positioning value $x_{m,Ai}$ is obtained by performing the positioning processing using the orientation measurement value $(\theta_k, \varphi_k)$ present in the time domain m and the orientation measurement error $(\sigma_{\theta,k}, \sigma_{\varphi,k})$ accompanying the orientation measurement value $(\theta_k, \varphi_k)$.

In the sensor set $A_i$, the temporary positioning accuracy $R_{m,Ai}$ is estimated using the temporary positioning value $x_{m,Ai}$ and the position and orientation measurement error $(\sigma_{\theta,k}, \sigma_{\varphi,k})$ of the orientation sensor S corresponding to the temporary positioning value $x_{m,Ai}$.

As a positioning method for performing positioning processing, for example, a method based on weighted least squares estimation or a method based on maximum a posteriori (MAP) estimation is used.

In addition, when the state (positioning value) $x_m$ includes not only a position component but also a speed component, the state $x_m$ is a state vector having six components of three dimensions of positions and three dimensions of speeds in a three-dimensional space, and a method of estimating the position and the speed of the target by MAP estimation on the basis of different orientation measurement times and orientation measurement errors of a plurality of sensors described in the following Non-Patent Literature may be used.

As a method of estimating the temporary positioning accuracy $R_{m,Ai}$, for example, a method of setting an observation error covariance with a lower limit of Bayesian Cramer-Rao Boundary (BCRB) described in the following Non-Patent Literature is used.

Non Patent Literature: L.Badriasl, s.Arulampalam and A.Finn, "A Novel Batch Bayesian WIV Estimator for Three-Dimensional TMA Using Bearing and Elevation Measurements," IEEE Transactions on Signal Processing,vol.66,no.4,pp.1023-1036,Feb.15,2018.

A residue $L_{k,Ai}$ of the k-th orientation measurement value $(\theta_k, \varphi_k)$ in the time domain m is calculated by a statistical distance defined by a temporary positioning value $x_{k,Ai}$ expressed by the following Formula (6) obtained by converting the measurement time $t_{m,Ai}$ expressed by the above Formula (5) into a measurement time $t_k$ by a state transition matrix $\Phi_{k|(m,Ai)}$ expressed by the following Formula (7) and a temporary positioning accuracy $R_{k,Ai}$ expressed by the following Formula (8).

$$x_{k,A_i} = \Phi_{k|(m,A_i)} x_{m,A_i} \qquad \cdots (6)$$

$$\Phi_{k|(m,A_i)} = \begin{bmatrix} I_{3\times3} & (t_k - t_{m,A_i})I_{3\times3} \\ 0 & I_{3\times3} \end{bmatrix} \qquad \cdots (7)$$

$$R_{k,A_i} = \Phi_{k|(m,A_i)} R_{m,A_i} \Phi_{k|(m,A_i)}^T + Q_k \qquad \cdots (8)$$

$$e_{k,A_i} = \left[\theta(x_{k,A_i}) - \theta_k, \phi(x_{k,A_i}) - \phi_k\right]^T \qquad \cdots (9)$$

$$R_{k,A_i}^{DOA} = H_k R_{k,A_i} H_k^T + \Sigma_{\theta\phi,k} \qquad \cdots (10)$$

$$\Sigma_{\theta\phi,k} = diag([\sigma_{\theta_k}^2, \; \sigma_{\phi_k}^2]) \qquad \cdots (11)$$

$$L_{k,A_i}^2 = e_{k,A_i}^T \left(R_{k,A_i}^{DOA}\right)^{-1} e_{k,A_i} \qquad \cdots (12)$$

The second term Qk on the right side in the above Formula (8) is a driving noise covariance. The above Formula (9) represents a residue $e_{k,Ai}$ between a predicted value and the orientation measurement value $(\theta_k, \varphi_k)$ to be determined. The above Formula (10) represents a residual error covariance of DOA in the sensor set $A_i$. $H_k$ on the right side in the above Formula (10) is a partial differential matrix of the position component with respect to the angle component. The above Formula (11) represents an error covariance $\Sigma_{\theta\varphi,k}$ of DOA. The above Formula (12) represents the square of the residue $L_{k,Ai}$ of the k-th orientation measurement value $(\theta_k, \varphi_k)$ in the time domain m.

In a case where the residue $L_{k,Ai}$ of the orientation measurement values k = $k_{(m,Ai),S}$,..., $k_{(m,Ai),e}$, the number of which is equal to or larger than a certain ratio parameter β, are within a threshold $\alpha_1$ in the set $S_{m,Ai}$ of the orientation measurement values $(\theta_k, \varphi_k)$ of the sensor set $A_i$ used for the calculation of the temporary positioning value $x_{k,Ai}$, all the orientation measurement values within the threshold are flagged.

When a set of orientation measurement values $(\theta_k, \varphi_k)$ flagged in the sensor set $A_i$ is $T_{m,Ai'}$, it can be said that the temporary positioning value $x_{k,Ai'}$ of the sensor set $A_{i'}$ satisfying this flag condition is highly likely to be the target 100 since the orientation measurement values are concentrated, and the orientation measurement values $(\theta_k, \varphi_k)$ belonging to the set $T_{m,Ai'}$ are highly likely to be normal values of the target.

In the following formulas (13) and (14), IF is a determination expression that returns 1 when the condition in the parentheses is satisfied and returns 0 when the condition in the parentheses is not satisfied.

$$T_{m,A_i} = \left\{k | k \in S_{m,A_i}, L_{k,A_i} < \alpha_1\right\} \; if \; \sum_{k=k_{(m,A_i),s}}^{k_{(m,A_i),e}} \frac{IF\left(L_{k,A_i} < \alpha_1\right)}{K_{m,A_i}} \geq \beta$$

$$\cdots (13)$$

$$T_{m,A_i} = \emptyset \qquad \text{if } \sum_{k=k_{(m,A_i),s}}^{k_{(m,A_i),e}} \frac{\text{IF}\left(L_{k,A_i} < \alpha_1\right)}{K_{m,A_i}} < \beta \qquad \cdots (14)$$

This processing is repeated to determine a set $T_{m,A_i}$ of orientation measurement values $(\theta_k, \varphi_k)$ that are considered normal in all the sensor sets $A_i$. At this time, an orientation measurement value $(\theta_k, \varphi_k)$ belonging to the sum set $T_m$ illustrated in the following Formula (15) is determined as a normal value in this positioning gate determination, and an orientation measurement value $(\theta_k, \varphi_k)$ in the time domain m belonging to an auxiliary set $T\_m\wedge C$ illustrated in the following Formula (16), that is, an orientation measurement value $(\theta_k, \varphi_k)$ of an orientation sensor that has never been determined as a normal value in all the sensor sets is determined as an abnormal value.

$$T_m = \bigcup_{i=1}^{I} T_{m,A_i} \qquad \cdots (15)$$

$$T_m^C = S_m - T_m \qquad \cdots (16)$$

Furthermore, at this time, the set $T_m$ can be determined by estimating which sensor set $A_i$ indicates the same target 100 by performing spatial clustering of the temporary positioning value, instead of including, in the set $T_m$, an orientation measurement value $(\theta_k, \varphi_k)$ determined to be a normal value at least once in all the sensor sets $A_i$.

The reliability setting unit 44c sets the orientation measurement error $(\sigma_{\theta,k}, \sigma_{\varphi,k})$ accompanying the orientation measurement value $(\theta_k, \varphi_k)$ determined to be an abnormal value by the positioning gate determining unit 44b as accuracy in the multipath environment to the parameter value $(\sigma_{\theta,err'}, \sigma_{\varphi,err'})$ obtained by degrading the orientation measurement error, that is, lowering the reliability of the orientation measurement value $(\theta_k, \varphi_k)$, and obtains the parameter value as a reset orientation measurement error of the parameter value $(\sigma_{\theta,err'}, \sigma_{\varphi,err'})$, and is used by the positioning processing unit 45.

The parameter value $(\sigma_{\theta,err'}, \sigma_{\varphi,err'})$ obtained by lowering the reliability of the orientation measurement value $(\theta_k, \varphi_k)$ is preferably intentionally increased.

The intentional increase here means that the value of $\sigma_{\theta,k}$ in the orientation measurement error accompanying the orientation measurement value $(\theta_k, \varphi_k)$ determined to be an abnormal value is set to the value of $\sigma_{\theta,err'}$ in the parameter value larger than the value of $\sigma_{\theta,k}$.

In short, the value indicated by the orientation measurement error accompanying the orientation measurement value $(\theta_k, \varphi_k)$ determined to be an abnormal value is reset to a parameter value larger than the value indicated by the orientation measurement error accompanying the orientation measurement value determined to be a normal value.

That is, the parameter value is a parameter element determined by the reliability obtained by setting the orientation measurement value determined to be an abnormal value to the orientation measurement value determined to be a normal value.

In addition, the reliability setting unit 44c maintains without change the orientation measurement error $(\sigma_{\theta,k}, \sigma_{\varphi,k})$ accompanying the orientation measurement value $(\theta_k, \varphi_k)$ determined to be a normal value by the positioning gate determining unit 44b, and the reliability of the orientation measurement value $(\theta_k, \varphi_k)$ is not lowered and is used as a reset orientation measurement error maintained without change by the positioning processing unit 45.

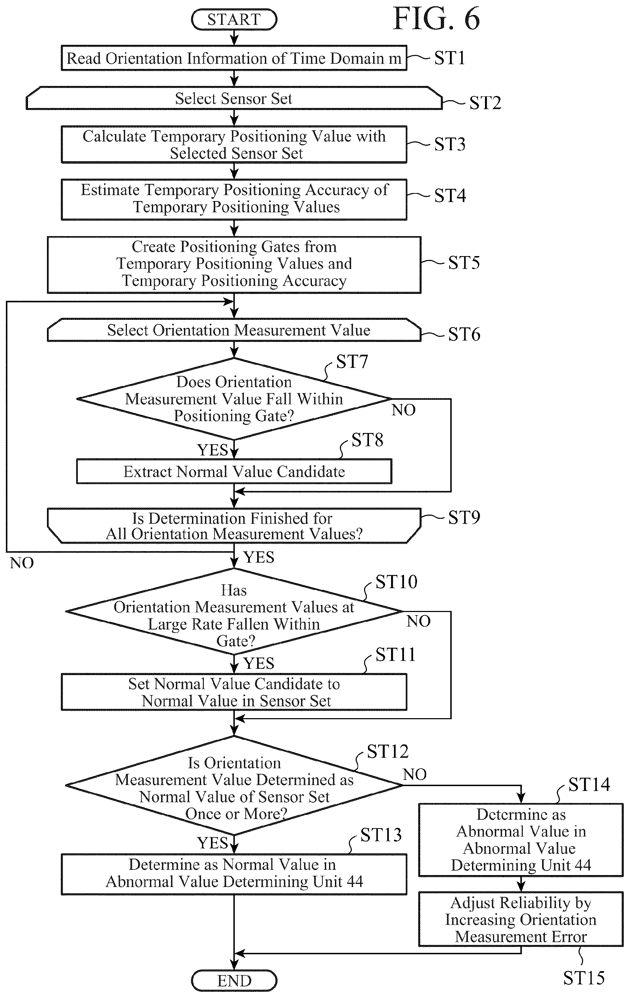

Next, the operation of the target trajectory estimating device, mainly the operation of the abnormal value determining unit 44 will be described with reference to FIG. 6.

The orientation information reading unit 41 reads the orientation information indicating the orientation measurement values $(\theta_k, \varphi_k)$ from the plurality of orientation measuring units 20 accumulated in the storage device 30, the measurement time $t_k$ accompanying and associated with the orientation measurement values $(\theta_k, \varphi_k)$, and the orientation information indicating the position information $(x^r_k, y^r_k, z^r_k)$ of each of the orientation sensors 10 in the time during which each of the plurality of orientation sensors 10 has observed the target 100.

In addition, the orientation measurement error information indicating the orientation measurement error $(\sigma_{\theta,k}, \sigma_{\varphi,k})$ accumulated in the storage device 30 or the orientation measurement error $(\sigma_{\theta,k}, \sigma_{\varphi,k})$ accompanying the orientation measurement value $(\theta_k, \varphi_k)$ set by the error setting unit 42 in the time during which each of the plurality of orientation sensors 10 has observed the target 100 is read.

Next, the time domain dividing unit 43 divides orientation information indicating the orientation measurement value $(\theta_k, \varphi_k)$ read by the orientation information reading unit 41, an orientation measurement error $(\sigma_{\theta,k}, (\sigma_{\varphi,k})$ accompanying the orientation measurement value $(\theta_k, \varphi_k)$, the measurement time $t_k$, and position information $(x^r_k, y^r_k, z^r_k)$ of each orientation sensor 10 into M pieces on the basis of the measurement time $t_k$.

For the orientation measurement values $(\theta_k, \varphi_k)$ in the time during which the N sensors divided by the time domain dividing unit 43 for each time domain m have observed the target, whether or not it is the abnormal value determining unit 44 is determined in accordance with steps ST1 to ST14 illustrated in FIG. 6.

In step ST1, the orientation information reading unit 44a reads the orientation measurement values $(\theta_k, \varphi_k)$ and the orientation measurement errors $(\sigma_{\theta,k}, \sigma_{\varphi,k})$ accompanying the orientation measurement values $(\theta_k, \varphi_k)$, the measurement time $t_k$, and the position information $(x^r_k, y^r_k, z^r_k)$ of the orientation sensor 10 in the time during which the N sensors divided for each time domain m have observed the target.

Step ST1 is a step of reading orientation information for each time domain m, and is a step of obtaining, by the positioning gate determining unit 44b, orientation measurement values $(\theta_k, \varphi_k)$ or the like divided into M by the time domain dividing unit 43.

Steps ST2 to ST14 are steps performed by the positioning gate determining unit 44b.

In step ST2, a certain number of orientation sensors 10 are selected from the plurality of orientation sensors 10 and classified into a plurality of sensor sets. For example, three orientation sensors 10 from four orientation sensors are classified as one sensor set. Step ST2 is a step of selecting a sensor set.

In step ST3, a temporary positioning value is calculated by performing generally known positioning processing of calculating a positioning value of an orientation measurement value $(\theta_k, \varphi_k)$ for each time domain m in each of the classified sensor sets. Step ST3 is a step of calculating a temporary positioning value in each time domain m in each set.

For example, in a case where three orientation sensors 10 from four orientation sensors are assumed as one set to classify the first set to the fourth set, in the time domain m, the temporary positioning value $x_{m,\{1,2,3\}}$ is calculated for the first set, the temporary positioning value $x_{m,\{1,2,4\}}$ is calculated for the second set, the temporary positioning value $x_{m,\{1,3,4\}}$ is calculated for the third set, and the temporary positioning value $x_{m,\{2,3,4\}}$ is calculated for the fourth set.

Such temporary positioning values are calculated for m time domains in the time domain 1 to the time domain M, and the number of temporary positioning values obtained by multiplying the number of time domains by the number of sets of sensor sets is calculated.

In step ST4, the temporary positioning accuracy accompanying all the temporary positioning values calculated in step ST3 is estimated. Step ST4 is a step of estimating the temporary positioning accuracy accompanying the temporary positioning values.

The estimation of the temporary positioning accuracy is estimated using the temporary positioning values and the position information $(x^r_k, y^r_k, z^r_k)$ and the orientation measurement errors $(\sigma_{\theta,k}, \sigma_{\varphi,k})$ of the orientation sensor 10 corresponding to the temporary positioning values.

For example, the temporary positioning accuracy $R_{m,\{1,2,3\}}$ is estimated for the temporary positioning value $x_{m,\{1,2,3\}}$, the temporary positioning accuracy $R_{m,\{1,2,4\}}$ is estimated for the temporary positioning value $x_{m,\{1,2,4\}}$, the temporary positioning accuracy $R_{m,\{1,3,4\}}$ is estimated for the temporary positioning value $x_{m,\{1,3,4\}}$, and the temporary positioning accuracy $R_{m,\{2,3,4\}}$ is estimated for the temporary positioning value $x_{m,\{2,3,4.}}$

In step ST5, positioning gates are set for all the temporary positioning values calculated in step ST3. Step ST5 is a step of creating positioning gates.

Setting of the positioning gate is created from the temporary positioning value and the temporary positioning accuracy.

For example, a positioning gate Ga is set for the temporary positioning value $x_{m,\{1,2,3\}}$, a positioning gate Gb is set for the temporary positioning value $x_{m,\{1,2,4\}}$, a positioning gate Gc is set for the temporary positioning value $x_{m,\{1,3,4\}}$, and a positioning gate Gd is set for the temporary positioning value $x_{m,\{2,3,4.}}$

In step ST6, an orientation measurement value $(\theta_k, \varphi_k)$ is selected, and in step ST7, it is determined whether or not the selected orientation measurement value $(\theta_k, \varphi_k)$ enters the corresponding gate. Step ST7 is a step of determining an orientation measurement value.

That is, in the time domain in which the selected orientation measurement value $(\theta_k, \varphi_k)$ is present, it is determined whether or not the selected orientation measurement value $(\theta_k, \varphi_k)$ enters the positioning gate G for the classified sensor set. When it is determined that the selected orientation measurement value enters the positioning gate G, the processing proceeds to step ST8, and when it is determined that the selected orientation measurement value does not enter the positioning gates G, the processing proceeds to step ST9.

In step ST8, the orientation measurement value $(\theta_k, \varphi_k)$ determined to enter the positioning gate G in step ST7 is a candidate for a normal value.

In step ST9, it is determined whether or not all the orientation measurement values $(\theta_k, \varphi_k)$ are selected in step ST6, and in a case where all the orientation measurement values are not selected, the processing returns to step ST6, and steps ST7 and ST8 are repeated.

In step ST9, if all the orientation measurement values $(\theta_k, \varphi_k)$ are selected, the processing proceeds to step ST10.

In this manner, whether or not to enter the positioning gate G is determined for all the orientation measurement values $(\theta_k, \varphi_k)$ read in step ST1.

In step ST10, in each of the sensor sets classified for each time domain m, it is determined that the orientation measurement value $(\theta_k, \varphi_k)$ has entered the positioning gate G at a large rate, that is, a rate at which the orientation

measurement value ($\theta_k$, $\varphi_k$) selected in step ST8 has been a candidate for a normal value. When it is determined that the orientation measurement value has entered the positioning gate G at a large rate, the processing proceeds to step ST11, and when it is determined that the orientation measurement value has not entered the positioning gate G, the processing proceeds to step ST12.

In step ST11, when it is assumed in step ST10 that the orientation measurement value ($\theta_k$, $\varphi_k$) has entered the positioning gate G at a large rate in the classified sensor set, the positioning measurement value ($\theta_k$, $\varphi_k$) in the sensor set is changed from the candidate of a normal value to the normal value.

In step ST12, it is determined in step ST11 whether the positioning measurement value ($\theta_k$, $\varphi_k$) is determined as a normal value of the sensor set once or more. When it is determined that the positioning measurement value is determined as a normal value once or more, the processing proceeds to step ST13. When it is determined that the positioning measurement value is not determined as a normal value once, the processing proceeds to step ST14.

In step ST13, the positioning measurement value ($\theta_k$, $\varphi_k$) determined once or more as a normal value of the sensor set in step ST12 is set as a normal value in the abnormal value determining unit 44.

In step ST14, the positioning measurement value ($\theta_k$, $\varphi_k$) determined not to be a normal value of the sensor set even once in step ST12 is set as an abnormal value in the abnormal value determining unit 44.

In this manner, whether it is a normal value or an abnormal value is determined for all the orientation measurement values ($\theta_k$, $\varphi_k$) read in step ST1.

In short, steps ST10 to ST14 determine whether the number of selected orientation measurement values ($\theta_k$, $\varphi_k$) entering the positioning gate G in the time domain m, that is, the number of residues $L_{k,Ai}$ of the selected orientation measurement values ($\theta_k$, $\varphi_k$) falling within the threshold $\alpha_1$ is equal to or larger than the proportion parameter $\beta$.

In other words, it is determined whether the selected orientation measurement value ($\theta_k$, $\varphi_k$) is concentrated at one point, i.e., indicates the only position, or is concentrated around a state vector including position and speed.

Based on the determination result, it is determined whether the value is a normal value or an abnormal value.

In step 15, the reliability setting unit 44c increases the orientation measurement error ($\sigma_{\theta,k}$, $\sigma_{\varphi,k}$) accompanying the orientation measurement value ($\theta_k$, $\varphi_k$) with respect to the orientation measurement value ($\theta_k$, $\varphi_k$) determined to be an abnormal value in step 14, and decreases the reliability with respect to the orientation measurement value ($\theta_k$, $\varphi_k$).

For example, the orientation measurement error ($\sigma_{\theta,k}$, ($\sigma_{\varphi,k}$) is set to a parameter value ($\sigma_{\theta,err'}$, $\sigma_{\varphi,err'}$) obtained by lowering the reliability of the orientation measurement value ($\theta_k$, $\varphi_k$).

Next, the positioning processing unit 45 performs, for each time domain m, positioning processing of calculating a positioning value using the orientation measurement value ($\theta_k$, $\varphi_k$) read by the orientation information reading unit 41, the orientation measurement error ($\sigma_{\theta,k}$, $\sigma_{\varphi,k}$) reset by the abnormal value determining unit 44 accompanying the orientation measurement value ($\theta_k$, $\varphi_k$), the measurement time $t_k$, and the position information ($x^r_k$, $y^r_k$, $z^r_k$) of the orientation sensor 10, obtains a positioning value $x_m$ for the target 100 in the time domain m, and obtains target position information indicating the positioning value $x_m$ of the target 100 in the time domain m.

The output unit 46 connects all the positioning values $x_1$ to $x_M$ at the representative time $t_m$ from the time domain 1 to the time domain M indicating the estimated position of the target 100 obtained by the positioning processing unit 45 in time-series order, and outputs the connected values to the output device 50 as object trajectory information indicating an estimated trajectory of the target 100.

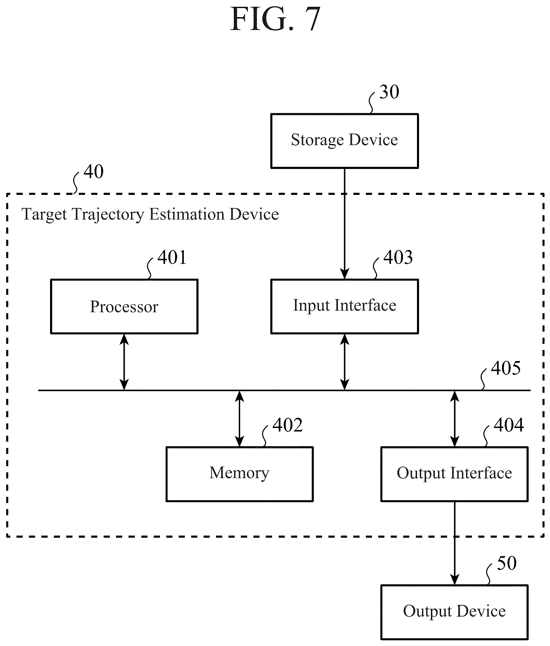

The target trajectory estimating device is implemented by a hardware configuration by a computer, and includes a processor 401, a memory 402, an input interface 403, and an output interface 404 as illustrated in FIG. 7, which are connected to each other via a bus 405.

The memory 402 includes a large-capacity semiconductor memory (random access memory (RAM)) and a storage device (read only memory (ROM)) such as a nonvolatile recording device such as a hard disk device or an SSD device.

The processor 401 controls and manages the memory 402, the input interface 403, and the output interface 404.

The processor 401 temporarily stores the program stored in the ROM of the memory 402 in the RAM, and executes processing of generating the estimated trajectory of the target 100 according to the software program stored in the RAM.

The input interface 403 corresponds to the orientation information reading unit 41 illustrated in FIG. 1, and the output interface 404 corresponds to the output unit 46 illustrated in FIG. 1.

The functions of a part of the time domain dividing unit 43, the abnormal value determining unit 44, the positioning processing unit 45, and the output unit 46 illustrated in FIG. 1 are implemented by the processor 401 loading a program stored in the memory 402 and operating according to the loaded program.

The target trajectory estimating method of the target trajectory estimating device including steps ST1 to ST14 is performed by the processor 401 executing processing according to a program stored in the memory 402.

That is, the program stored in the memory 402 includes: a procedure of dividing a time during which each of the plurality of orientation sensors 10 that has received an incoming radio wave from the target 100 has observed the target 100 into a plurality of time domains m in time-series order, and dividing orientation information indicating an orientation

measurement value $(\theta_k, \varphi_k)$ obtained by each of the plurality of orientation sensors 10 for each of the divided time domains m; a procedure of selecting a certain number of orientation sensors 10 from the plurality of orientation sensors 10 and classifying the selected orientation sensors into a plurality of sensor sets, estimating a temporary positioning value $x_{m,Ai}$ for each of the divided time domains m in each of the plurality of sensor sets, setting a positioning gate G determined by the obtained temporary positioning values $x_{m,Ai}$, and determining that an orientation measurement value $(\theta_k, \varphi_k)$ indicated by orientation information present in the time domain m is a normal value when it is present in the set positioning gate G and determining that the orientation measurement value $(\theta_k, \varphi_k)$ indicated by orientation information present in the time domain m is an abnormal value when it is not present in any of the set positioning gates G; a procedure of resetting an orientation measurement error $(\sigma_{\theta,k}, \sigma_{\varphi,k})$ accompanying the orientation measurement value $(\theta_k, \varphi_k)$ determined as an abnormal value to a setting for lowering reliability with respect to trajectory estimation of the orientation measurement value $(\theta_k, \varphi_k)$; a procedure of estimating, for each of the divided time domains m, a positioning value in each of the time domains m with respect to the target 100 by using the orientation measurement value $(\theta_k, \varphi_k)$ indicated by the plurality of pieces of orientation information present in the plurality of time domains m and the reset orientation measurement error $(\sigma_{\theta,k}, \sigma_{\varphi,k})$ accompanying the orientation measurement value $(\theta_k, \varphi_k)$; and a procedure of outputting object trajectory information indicating a trajectory of the target 100 by connecting the estimated positioning values for each of the time domains m in time-series order.

As described above, the target trajectory estimating device 40 according to the first embodiment includes: the time domain dividing unit 43 that divides a time during which each of the plurality of orientation sensors 10 that has received an incoming radio wave from the target 100 has observed the target 100 into a plurality of time domains m in time-series order, and divides orientation information indicating an orientation measurement value $(\theta_k, \varphi_k)$ obtained by each of the plurality of orientation sensors 10 for each of the divided time domains m; the abnormal value determining unit 44 that determines, for each of the divided time domains m, whether or not the orientation measurement value $(\theta_k, \varphi_k)$ indicated by the plurality of pieces of orientation information present in the plurality of time domains m indicates an abnormal value, and resets the orientation measurement error $(\sigma_{\theta,k}, \sigma_{\varphi,k})$ accompanying the orientation measurement value $(\theta_k, \varphi_k)$ determined as an abnormal value to a setting for lowering the reliability of trajectory estimation of the orientation measurement value $(\theta_k, \varphi_k)$, and resets the orientation measurement error $(\sigma_{\theta,k}, \sigma_{\varphi,k})$ accompanying the orientation measurement value determined not to be an abnormal value without changing reliability with respect to the trajectory estimation of the orientation measurement value $(\theta_k, \varphi_k)$, the positioning processing unit 45 that estimates, for each of the time domains m, a positioning value in each of the time domains m with respect to the target 100 by using the orientation measurement value $(\theta_k, \varphi_k)$ indicated by the plurality of pieces of orientation information present in the plurality of time domains m and the reset orientation measurement error $(\sigma_{\theta,k}, \sigma_{\varphi,k})$ accompanying the orientation measurement value $(\theta_k, \varphi_k)$; and the output unit 46 that outputs object trajectory information indicating a trajectory of the target 100 by connecting the positioning values for each of the time domains m estimated by the positioning processing unit 45 in time-series order, so that even if the orientation sensor 10 is in a multipath environment, the positioning value of the target 100 can be estimated with high accuracy, and a trajectory closer to an actual trajectory of the target 100 can be estimated.

The target trajectory estimating device 40 according to the first embodiment determines whether or not an orientation measurement value $(\theta_k, \varphi_k)$ in the abnormal value determining unit 44 indicates an abnormal value by: selecting a certain number of orientation sensors 10 from the plurality of orientation sensors 10 and classifying the selected orientation sensors into a plurality of sensor sets; in each of the plurality of sensor sets, performing positioning processing using an orientation measurement value $(\theta_k, \varphi_k)$ indicated by each of the plurality of pieces of orientation information present in the plurality of time domains m and an orientation measurement error $(\sigma_{\theta,k}, \sigma_{\varphi,k})$ accompanying the orientation measurement value $(\theta_k, \varphi_k)$ for each divided time domain m to obtain a positioning value $x_m$ in the sensor set for the target 100; estimating a temporary positioning accuracy $R_m$ in the sensor set using the positioning value $x_m$ and a position and orientation measurement error $(\sigma_{\theta,k}, \sigma_{\varphi,k})$ of the orientation sensor 10 corresponding to the positioning value $x_m$; evaluating the reliability of the orientation measurement value $(\theta_k, \varphi_k)$ by determining whether the orientation measurement value $(\theta_k, \varphi_k)$ indicated by each of the plurality of pieces of orientation information present in the plurality of time domains m is present in the positioning gate G determined by the temporary positioning values $x_{m,Ai}$ and the temporary positioning accuracy $R_{m,Ai}$; and determining the orientation measurement value $(\theta_k, \varphi_k)$ of which the evaluated reliability is high as a normal value, and the orientation measurement value $(\theta_k, \varphi_k)$ of which the evaluated reliability is low as an abnormal value, and thus the reliability of the orientation measurement value $(\theta_k, \varphi_k)$ is set by using the positioning gate G that determines the coincidence of the orientation measurement value $(\theta_k, \varphi_k)$, so that it is possible to calculate a positioning value in which the contribution of the abnormal orientation measurement value $(\theta_k, \varphi_k)$ is reduced.

In addition, it is possible to specify the orientation sensor 10 that outputs a normal orientation measurement value $(\theta_k, \varphi_k)$.

Furthermore, since the determination by the positioning gate G is performed by calculating the positioning value $x_m$ for each sensor set to determine an abnormal value, it is possible to quantitatively determine the abnormality of the orientation measurement value $(\theta_k, \varphi_k)$ on the basis of the positioning gate G determined by the temporary positioning accuracy $R_m$. Thus, it is possible to establish robustness with respect to an abnormal value generated in a multipath environment in the positioning processing performed using the orientation measurement values $(\theta_k, \varphi_k)$ of the plurality of orientation sensors 10, and to perform highly accurate positioning processing in which a normal orientation measurement value $(\theta_k, \varphi_k)$ is reliable even in the multipath environment.

In the target trajectory estimating device 40 according to the first embodiment, the abnormal value determining unit 44 includes: the positioning gate determining unit 44b that selects a certain number of orientation sensors 10 from the plurality of orientation sensors 10 and classifies the orientation sensors into a plurality of sensor sets, estimates the temporary positioning values $x_{m,Ai}$ for each of the plurality of classified sensor sets, sets a positioning gate G determined by the obtained temporary positioning values $x_{m,Ai}$ for each of the divided time domains m, determines that an orientation measurement value $(\theta_k, \varphi_k)$ indicated by orientation information present in the time domain m is a normal value when it is present in the set positioning gate G, and determines that an orientation measurement value $(\theta_k, \varphi_k)$ indicated by orientation information present in the time domain m is an abnormal value when it is not present in any of the set positioning gates G as an abnormal value; and the reliability setting unit 44c that resets an orientation measurement error $(\sigma_{\theta,k}, \sigma_{\varphi,k})$ accompanying an orientation measurement value $(\theta_k, \varphi_k)$ determined to be an abnormal value to a setting for lowering reliability with respect to trajectory estimation of the orientation measurement value $(\theta_k, \varphi_k)$, the positioning processing unit 45, for each of the divided time domains m, estimates the positioning value in each of the time domains m with respect to the target 100 by using the orientation measurement value $(\theta_k, \varphi_k)$ indicated by the plurality of pieces of orientation information present in the plurality of time domains m and the reset orientation measurement error $(\sigma_{\theta,k}, \sigma_{\varphi,k})$ accompanying the orientation measurement value $(\theta_k, \varphi_k)$, the output unit 46 outputs the object trajectory information indicating the trajectory of the target 100 by connecting the estimated positioning values for each of the time domains m in time-series order, and thus the positioning processing unit 45 performs positioning processing by using the orientation measurement error $(\sigma_{\theta,k}, \sigma_{\varphi,k})$ with reduced reliability accompanying the orientation measurement value $(\theta_k, \varphi_k)$ determined as an abnormal value, so that even if the orientation sensor 10 is in a multipath environment, the positioning value of the target 100 can be estimated with high accuracy, and the trajectory closer to the actual trajectory of the target 100 can be estimated.

In addition, it is possible to quantitatively determine the abnormality of the orientation measurement value $(\theta_k, \varphi_k)$ using the positioning gate G determined by the temporary positioning values $x_{m,Ai}$.

Second Embodiment

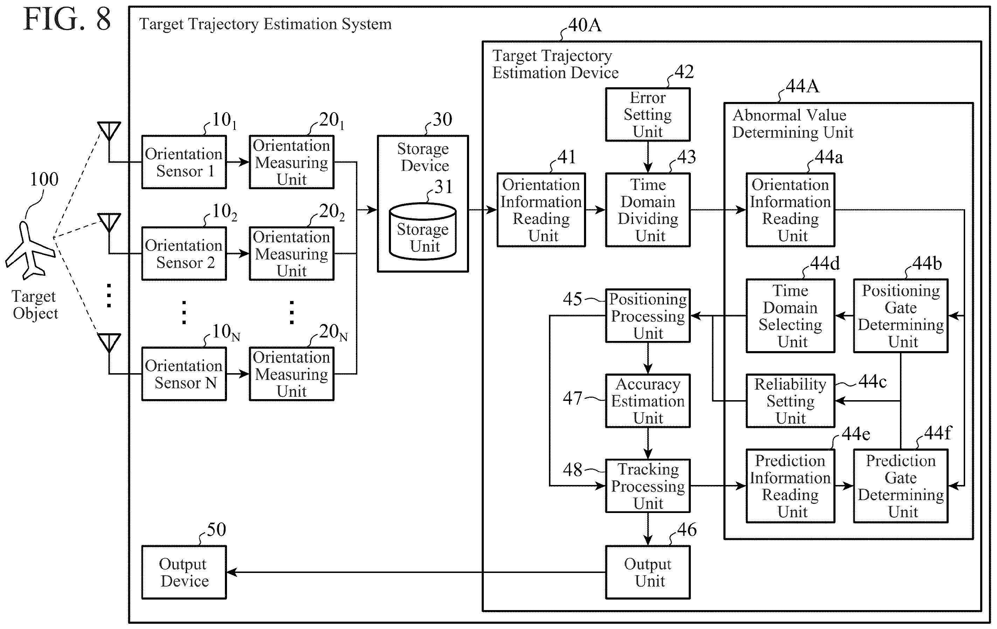

A target trajectory estimating device according to a second embodiment will be described with reference to FIGS. 8 to 10.

The target trajectory estimating device according to the second embodiment is different in that while the target trajectory estimating device according to the first embodiment sequentially performs positioning processing in time-series order for each of the divided time domains m obtained by dividing orientation information indicating orientation measurement values $(\theta_k, \varphi_k)$ obtained by a plurality of orientation sensors 10, batch-type processing of collectively acquiring orientation measurement values $(\theta_k, \varphi_k)$ obtained by a plurality of orientation sensors 10 to estimate a trajectory is performed while each of the plurality of orientation sensors 10 observes the target 100 (hereinafter, referred to as a target observation time), and the other points are the same.

Note that, in FIGS. 8 to 10, the same reference numerals as those attached in FIGS. 1 to 7 denote the same or corresponding parts.

FIG. 8 is a block diagram illustrating a schematic configuration of a target trajectory estimating system including the target trajectory estimating device according to the second embodiment.

As illustrated in FIG. 8, the target trajectory estimating system includes a plurality of orientation sensors $10_1$ to $10_N$, a plurality of orientation measuring units $20_1$ to $20_N$, a storage device 30, a target trajectory estimating device 40A, and an output device 50.

Since the plurality of orientation sensors $10_1$ to $10_N$, the plurality of orientation measuring units $20_1$ to $20_N$, the storage device 30, and the output device 50 are the same as the plurality of orientation sensors $10_1$ to $10_N$, the plurality of orientation measuring units $20_1$ to $20_N$, the storage device 30, and the output device 50 described in the first embodiment, the description thereof will be omitted.

The target trajectory estimating device 40A includes an orientation information reading unit 41, an error setting unit 42, a time domain dividing unit 43, an abnormal value determining unit 44A, a positioning processing unit 45, an accuracy estimating unit 47, a tracking processing unit 48, and an output unit 46.

Since the orientation information reading unit 41 and the time domain dividing unit 43 are the same as the orientation information reading unit 41 and the time domain dividing unit 43 described in the first embodiment, the description thereof will be omitted.

The abnormal value determining unit 44A includes an orientation information reading unit 44a, a positioning gate determining unit 44b, a reliability setting unit 44c, a time domain selecting unit 44d, a prediction information reading unit 44e, and a prediction gate determining unit 44f.

The orientation information reading unit 44a, the positioning gate determining unit 44b, and the reliability setting unit 44c are substantially the same as those of the target trajectory estimating device according to the first embodiment.

An example of positioning gate determining unit 44b described in the first embodiment will be briefly described.

The positioning gate determining unit 44b selects a certain number of orientation sensors 10 from the plurality of orientation sensors 10, classifies the orientation sensors into a plurality of sensor sets, estimates a temporary positioning values $x_{m,Ai}$ for each of time domains m divided by the time domain dividing unit 43 in each of the plurality of sensor sets, sets the positioning gates G determined by the estimated temporary positioning values $x_{m,Ai}$, determines that the orientation measurement value $(\theta_k, \varphi_k)$ indicated by orientation information present in the time domain m is a normal value when it is present in the set positioning gates G, and determines that the orientation measurement value $(\theta_k, \varphi_k)$ indicated by orientation information present in the time domain m is an abnormal value when it is not present in any of the set positioning gates G as an abnormal value.

An example of the reliability setting unit 44c described in the first embodiment will be briefly described.

The reliability setting unit 44c resets the orientation measurement error $(\sigma_{\theta,k}, \sigma_{\varphi,k})$ accompanying the orientation measurement value $(\theta_k, \varphi_k)$ determined to be an abnormal value by the positioning gate determining unit 44b to the parameter value $(\sigma_{\theta,err'}, \sigma_{\varphi,err'})$ obtained by lowering the reliability of the orientation measurement value $(\theta_k, \varphi_k)$, and resets the orientation measurement error $(\sigma_{\theta,k}, \sigma_{\varphi,k})$ accompanying the orientation measurement value $(\theta_k, \varphi_k)$ determined to be a normal value by the positioning gate determining unit 44b as it is without lowering the reliability of the orientation measurement value $(\theta_k, \varphi_k)$ and with high reliability.

In short, the positioning gate determining unit 44b and the reliability setting unit 44c perform positioning gate determination as to whether the measured orientation value is a normal value or an abnormal value using the positioning gate G for all the orientation measurement values $(\theta_k, \varphi_k)$ present in the entire time domain of the target observation time, and it is determined that the orientation measurement value $(\theta_k, \varphi_k)$ determined as the normal value has high reliability, and the orientation measurement value $(\theta_k, \varphi_k)$ determined as the abnormal value has low reliability.

In the positioning gate determination using the positioning gates G in the entire time domain of the target observation time, the time domain selecting unit 44d calculates a variance between temporary positioning values $x_{m,Ai'}$ of the sensor set $A_{i'}$ determined to have high reliability, and selects the normal time domain m as $m_s$ based on the transition.

The selected time domain $m_s$ is set as a tracking start point time domain.

The method of selecting the time domain $m_s$ is a method of selecting a time domain in which a small variance continues or a time domain in which a variance is minimum.

The positioning processing unit 45 performs positioning processing of calculating the positioning value $x_m$ by using the orientation measurement value $(\theta_k, \varphi_k)$ indicated by the orientation information, the orientation measurement error $(\sigma_{\theta,k}, \sigma_{\varphi,k})$ reset by the reliability setting unit 44c accompanying the orientation measurement value $(\theta_k, \varphi_k)$, the measurement time $t_k$, and the position information $(x^r_k, y^r_k, z^r_k)$ of the orientation sensor 10 in time-series order for each of a forward direction and a reverse direction for each of time domains m adjacent from the selected tracking start point time domain $m_s$ as a starting point, obtains the positioning value $x_m$ for the target 100 in the time domain m, and obtains target position information indicating the positioning value $x_m$ of the target 100 in the time domain m.

The accuracy estimating unit 47 estimates, for each time domain m, the positioning accuracy $R_m$ for the positioning value $x_m$ estimated by the positioning processing unit 45 using the orientation measurement error $(\sigma_{\theta,k}, \sigma_{\varphi,k})$ reset by the reliability setting unit 44c in the abnormal value determining unit 44A.

The accuracy estimating unit 47 estimates the positioning accuracy $R_m$ of the positioning value $x_m$ for each time domain m from the positioning value $x_m$, the position information $(x^r_k, y^r_k, z^r_k)$ of the orientation sensor 10, and the orientation measurement error $(\sigma_{\theta,k}, \sigma_{\varphi,k})$.

The tracking processing unit 48 obtains a smoothed value and a predicted value by filtering the positioning values $x_m$ using the positioning value $x_m$ estimated by the positioning processing unit 45 and the positioning accuracy $R_m$ estimated by the accuracy estimating unit 47 corresponding to the positioning values $x_m$.

The tracking processing unit 48 calculates filtering of the positioning values $x_m$ by a Kalman filter using the positioning values $x_m$ and the positioning accuracy $R_m$ for each time domain m adjacent from the tracking start point time domain $m_s$ as a starting point.

The tracking processing unit 48 obtains a smoothed value $x_{m|m}$ obtained by weighting and averaging the adjacent positioning values $x_m$ starting from the tracking start point time domain $m_s$ and the predicted values based on the continuity of the movement of the target 100. The smoothed value $x_{m|m}$ is the output of the target position of the representative time.

As a tracking processing method, for example, there is a Kalman filter that outputs a predicted value $x_{k|m}$ of an arbitrary measurement time $t_k$ in parallel.

In the second embodiment, the smoothed value $x_{m|m}$ is obtained by applying the Kalman filter in the time forward direction to the positioning processing of the time domain adjacent in the direction in which the time elapses from the tracking start point time domain $m_s$ as the starting point, that is, in the forward direction, and the smoothed value $x_{m|m}$ is obtained by applying the Kalman filter in the time reverse direction to the positioning processing of the time domain adjacent in the direction in which the time returns from the tracking start point time domain $m_s$ as the starting point, that is, in the reverse direction.

The Kalman filter of the tracking processing is processing of estimating a smoothed value (weighted average) at the current time and a predicted value (calculated by a motion model from the smoothed value at the current time) at the next time from the predicted value at the previous time and the observation value at the current time.

Here, in the tracking start point time domain $m_s$, it is necessary to select a time domain with a low degree of abnormality in which it can be determined that the positioning value is close to a true value by the positioning gate determination functioning normally.

In the positioning gate determination, the temporary positioning values $x_{m,Ai'}$ are calculated in order to determine whether the orientation measurement value of the orientation sensor is concentrated on one point or one state vector.

Therefore, in order to check whether the positioning gate normally functions, it is only required to evaluate a variance between the temporary positioning values $x_{m,Ai'}$ of all the sensor sets having high reliability in each time domain m, and the magnitude of the variance can be said to be the abnormality of positioning in the time domain.

When the abnormality in the entire time domain is evaluated, a time domain having a continuously low abnormality or a time domain having the lowest abnormality is selected as the tracking start point time domain $m_s$ from the ease of tracking processing.

First, the Kalman filter in the time reverse direction applied to the tracking processing in the time domain m after the tracking start point time domain $m_s$ will be described using a mathematical formula.

The motion model of the Kalman filter in the time reverse direction is described using a state transition matrix $\Gamma_{m|m+1}$ in the time reverse direction from the representative time $t_{m+1}$ to $t_m$ with $x_{m|m+1}$ as a predicted value and $x_{m+1|m+1}$ as a smoothed value.

The predicted value $x_{m|m+1}$ is expressed by the following Formula (17), and the state transition matrix $\Gamma_{m|m+1}$ is expressed by the following Formula (18).

$$x_{m|m+1} = \Gamma_{m|m+1} x_{m+1|m+1} + w_{m+1} \qquad \cdots (17)$$

$$\Gamma_{m|m+1} = \begin{bmatrix} I_{3\times3} & (t_{m+1} - t_m)I_{3\times3} \\ 0 & I_{3\times3} \end{bmatrix} \qquad \cdots (18)$$

$W_{m+1}$ to $N(0, Q'_{m|m+1})$ are drive noises. Since the drive error covariance $Q'_{m|m+1}$ in the time reverse direction changes the position component in the negative direction when positive drive noise is added to the speed component, it is necessary to give a negative sign to the off-diagonal block, and $\Sigma_q$ is set as a covariance matrix of the three-dimensional position component as in the following Formula (19).

$$Q'_{m|m+1} = \begin{bmatrix} \frac{|t_m - t_{m+1}|^3}{3} \Sigma_q & -\frac{|t_m - t_{m+1}|^2}{2} \Sigma_q \\ -\frac{|t_m - t_{m+1}|^2}{2} \Sigma_q & |t_m - t_{m+1}|\Sigma_q \end{bmatrix} \qquad \cdots (19)$$

The observation model is $x_m = x_{m,true} + v_m$.

$v_m$ to $N(0, R_m)$ are observation noise and correspond to an estimation error of a positioning value.

In the initial step ($m = m_s$) of the Kalman filter in the time reverse direction, the positioning value $x_{ms}$ and the positioning accuracy $R_{ms}$ in the tracking start point time domain $m_s$ are directly the smoothed value $x_{ms|ms}$ ($= x_{ms}$) and the smoothed error covariance $P_{ms|ms}$ ($= R_{ms}$).

In the case of $m \le m_s$ - 1, the prediction processing in the time reverse direction is expressed by the following Formulas (20) and (21).

$$x_{m|m+1} = \Gamma_{m+1} x_{m+1|m+1} \qquad (20)$$

$$P_{m|m+1} = \Gamma_{m+1} P_{m+1|m+1} \Gamma_{m+1}^T + Q'_{m|m+1} \qquad \cdots (21)$$

The smoothing processing is expressed by the following Formulas (22) to (24).

$$K_m = P_{m|m+1} + (P_{m|m+1} + R_m)^{-1} \quad (22)$$

$$x_{m|m} = x_{m|m+1} + K_m(x_m - x_{m|m+1}) \quad (23)$$

$$P_{m|m} = P_{m|m+1} - K_m P_{m|m+1} \quad (24)$$

$P_{m|m+1}$ is a prediction error covariance, and $K_m$ is a Kalman gain.

In this manner, the smoothed value $x_{m|m}$ obtained from the positioning value $x_m$ in the time domain m and the predicted value $x_{m|m+1}$ in the time domain m predicted by the above Formula (20) in the time domain m + 1 using the Kalman filter in the time reverse direction by the tracking processing unit 48 is set as the output of the tracking processing unit 48 at the representative time $t_m$ indicating the estimated position of the target 100 in the output unit 46, and the positioning values $x_m$ before the tracking start point time domain $m_s$ are connected in time-series order to obtain object trajectory information indicating the estimated trajectory of the target 100 before the tracking start point time domain $m_s$.

On the other hand, the prediction information obtained by the tracking processing unit 48 is read by the prediction information reading unit 44e, and the prediction gate determining unit 44f performs prediction gate determination that is abnormal value determination for the orientation measurement value ($\theta_k$, $\varphi_k$) in the adjacent time domain m on the basis of the prediction information.

Although the prediction information reading unit 44e has been described as a functional unit for convenience of description, the prediction information obtained by the tracking processing unit 48 is directly used by the prediction gate determining unit 44f.

The prediction gate determining unit 44f performs prediction gate determination centered on a predicted value $x_{k|m+1}$.

The prediction gate determining unit 44f sets a prediction gate determined by the predicted value $x_{k|m+1}$ by the tracking processing unit 48 and the prediction accuracy $P_{k|m+1}$ estimated from the positioning accuracy $R_m$ estimated by the accuracy estimating unit 47, determines that the orientation measurement value ($\theta_k$, $\varphi_k$) indicated by each of the plurality of pieces of orientation information present in the plurality of time domains m is a normal value if it is present in the set prediction gate as a normal value, and determines that the orientation measurement value ($\theta_k$, $\varphi_k$) indicated by each of the plurality of pieces of orientation information present in the plurality of time domains m is an abnormal value if it is not present in any prediction gate.

Hereinafter, a method in which the prediction gate determining unit 44f performs the prediction gate determination using the tracking processing by the Kalman filter in the time reverse direction will be described by Formulas.

A residue $L_{k'}$ of the k-th orientation measurement value ($\theta_k$, $\varphi_k$) in the time domain m is calculated by a statistical distance defined by the prediction error covariance $P_{k|m+1}$ as the predicted value $x_{k|m+1}$ converted into the measurement time $t_k$ by the state transition matrix $\Phi_{k|(m,Ai)}$, and is expressed by the following Formula (25).

The prediction error covariance $P_{k|m+1}$ is expressed by the following Formula (27).

The following Formula (26) represents a state transition matrix $\Phi_{k|m+1}$.

$$x_{k|m+1} = \Phi_{k|m+1}\, x_{m+1|m+1} \qquad \cdots (25)$$

$$\Phi_{k|m+1} = \begin{bmatrix} I_{3\times3} & (t_{m+1} - t_k)I_{3\times3} \\ 0 & I_{3\times3} \end{bmatrix} \qquad \cdots (26)$$

$$P_{k|m+1} = \Phi_{k|m+1}P_{m+1|m+1}\Phi_{k|m+1}^{T} + Q'_{k|m+1} \qquad \cdots (27)$$

$$e_k = \left[\theta\big(x_{k|m+1}\big) - \theta_k, \phi\big(x_{k|m+1}\big) - \phi_k\right]^{T} \qquad \cdots (28)$$

$$P_s^{DOA} = H_k P_{k|m+1}H_k^{T} + \Sigma_{\theta\phi,k} \qquad \cdots (29)$$

$$(L_k')^2 = e_k^T (P_s^{DOA})^{-1} e_k \qquad \cdots (30)$$

The above Formula (28) represents a residue $e_k$ between the predicted value and the orientation measurement value ($\theta_k$, $\varphi_k$) to be determined.

The above Formula (29) represents a residual error covariance of predicted DOA.

The above Formula (30) represents the square of the residue $L_k'$ of the k-th orientation measurement value ($\theta_k$, $\varphi_k$) in the time domain m.

The predicted value $x_{m|m+1}$ centered on the prediction gate used in the prediction gate determination by the prediction gate determining unit 44f is different from the temporary positioning values $x_{k,Ai}$ centered on the positioning gate used in the positioning gate determination by the positioning gate determining unit 44b, and is obtained by performing positioning processing on the basis of the orientation measurement value that has already been subjected to the abnormal value determination by the positioning gate, and thus, the reliability is high.

Therefore, the reliability setting unit 44c resets the orientation measurement error ($\sigma_{\theta,k}$, $\sigma_{\varphi,k}$) depending on whether the residue $L_k'$ exceeds a threshold $\alpha_2$.

That is, as illustrated in the following Formulas (31) and (32), when the condition that the residue $L_k'$ in if is equal to or less than the threshold $\alpha_2$ is satisfied, the orientation measurement error $\sigma_{\theta k}$ is reset to $\sigma_{\theta k'}$ that is a normal value, the orientation measurement error $\sigma_{\varphi k}$ is reset to $\sigma_{\varphi k'}$ that is a normal value, and when the condition that the residue $L_k'$ in if exceeds the threshold $\alpha_2$ is satisfied, the orientation measurement error $\sigma_{\theta k}$ is reset to $\sigma_{\theta,err'}$ that is an abnormal value, and the orientation measurement error $\sigma_{\varphi k}$ is reset to $\sigma_{\varphi,err'}$ that is an abnormal value.

The reset orientation measurement error ($\sigma_{\theta,k}$, $\sigma_{\varphi,k}$) is used for the positioning processing in the positioning processing unit 45 from the time domain m next to the tracking start point time domain $m_s$.

$$\sigma_{\theta_k} = \begin{cases} \sigma_{\theta_k}, & \text{if} \quad L_k' \leq \alpha_2 \\ \sigma_{\theta,\text{err}}, & \text{if} \quad L_k' > \alpha_2 \end{cases} \qquad \cdots (31)$$

$$\sigma_{\phi_k} = \begin{cases} \sigma_{\phi_k}, & \text{if} \quad L_k' \leq \alpha_2 \\ \sigma_{\phi,\text{err}}, & \text{if} \quad L_k' > \alpha_2 \end{cases} \qquad \cdots (32)$$

On the other hand, the tracking processing unit 48 obtains the positioning value $x_m$ by applying the Kalman filter in the time forward direction in the tracking processing of the time domain adjacent in the direction in which the time elapses starting from the tracking start point time domain $m_s$.

That is, the tracking processing unit 48 obtains a smoothed value $x_{m|m}$ obtained by weighting and averaging the positioning value $x_m$ in the adjacent time domain m and the predicted value $x_{m|m-1}$ in the time domain m predicted in the time domain m - 1.

The tracking processing for obtaining the predicted value $x_{m|m-1}$ and the smoothed value $x_{m|m}$ is substantially similar to the tracking processing by the Kalman filter in the time reverse direction, and is a normal Kalman filter in the time forward direction, and thus the description thereof will be omitted.

In this manner, the smoothed value $x_{m|m}$ obtained by the tracking processing unit 48 using the Kalman filter in the time forward direction by tracking the positioning value $x_m$ in the adjacent time domain m and the predicted value $x_{m|m-1}$ of the time domain m predicted in the time domain m - 1 is set as the positioning value $x_m$ at the representative time $t_m$ indicating the estimated position of the target 100 in the output unit 46, and the positioning values $x_m$ after the tracking start point time domain $m_s$ are connected in time-series order to obtain object trajectory information indicating the estimated trajectory of the target 100 after the tracking start point time domain $m_s$.

The output unit 46 connects the estimated trajectory of the target 100 after the tracking start point time domain $m_s$ obtained by the tracking processing unit 48 using the Kalman filter in the forward direction and the estimated trajectory of the target 100 before the tracking start point time domain $m_s$ obtained by the tracking processing unit 48 using the Kalman filter in the time reverse direction to obtain object trajectory information indicating the estimated trajectory in the entire time domain of the target observation time in the target 100.

In addition, the prediction gate determination performed by the prediction gate determining unit 44f is also performed using the tracking processing by the Kalman filter in the time forward direction, and the prediction gate determining unit 44f performs the prediction gate determination centered on the predicted value $x_{k|m-1}$.

Since the prediction gate determination centered on the predicted value $x_{k|m-1}$ is substantially the same as the prediction gate determination centered on the predicted value $x_{k|m+1}$ by the Kalman filter in the time reverse direction, the description thereof will be omitted.

The reliability setting unit 44c resets the orientation measurement error ($\sigma_{\theta,k}$, $\sigma_{\varphi,k}$) depending on whether the residue $L_{k'}$ obtained by the prediction gate determination by the prediction gate determining unit 44f exceeds the threshold $\alpha_2$, similarly to the resetting by the Kalman filter in the time reverse direction.

The reset orientation measurement error ($\sigma_{\theta,k}$, $\sigma_{\varphi,k}$) obtained in the same manner as the prediction gate determination by the Kalman filter in the time reverse direction is used for the positioning processing in the positioning processing unit 45 from the time domain m after the tracking start point time domain $m_s$.

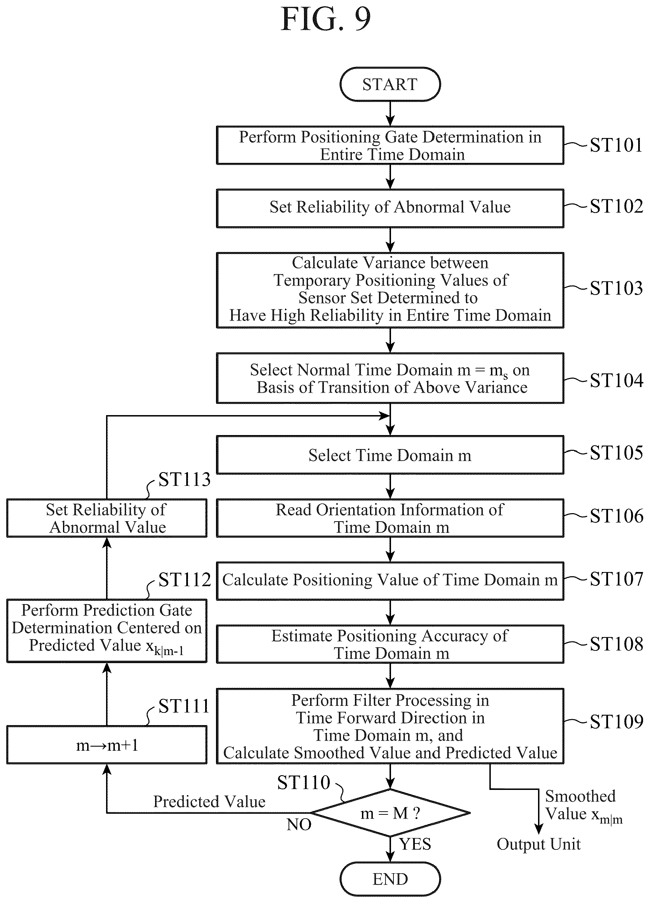

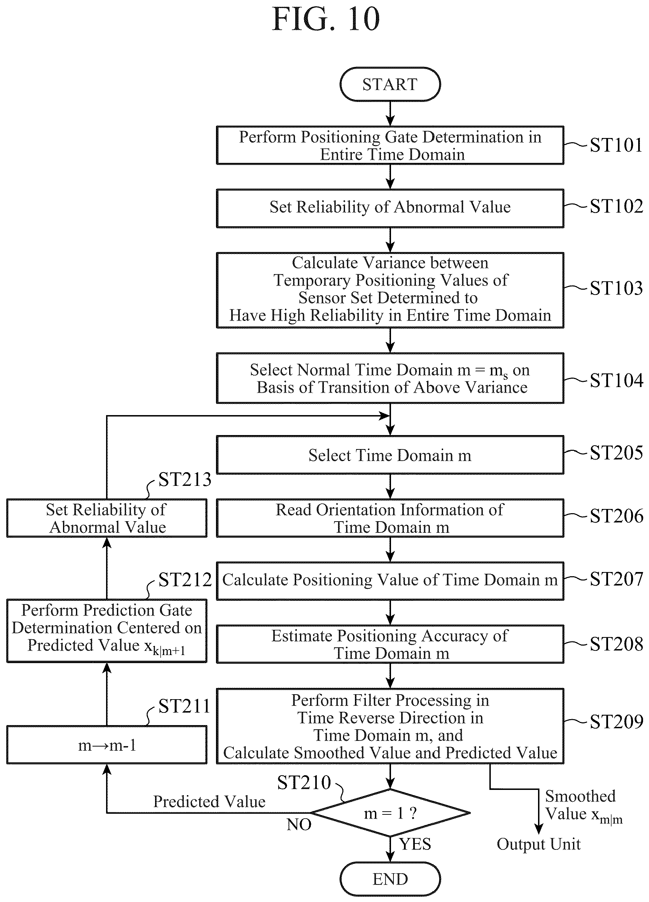

Next, the operation of the target trajectory estimating device will be described with reference to FIGS. 9 and 10 mainly focusing on tracking processing different from the first embodiment with respect to the operation of the abnormal value determining unit 44A.

Similarly to the operation described in the first embodiment, steps up to step ST15 illustrated in FIG. 6 are performed.

Steps ST12 to ST15 illustrated in FIG. 6 correspond to steps ST101 and ST102 illustrated in FIG. 9.

That is, the positioning gate determining unit 44b performs the positioning gate determination for each time domain m, and determines whether the orientation measurement value ($\theta_k$, $\varphi_k$) in the entire time domain of the target observation time (hereinafter, it is simply referred to as an entire time domain) is a normal value or an abnormal value, and the reliability setting unit 44c resets the orientation measurement error ($\sigma_{\theta,k}$, $\sigma_{\varphi,k}$) accompanying the orientation measurement value ($\theta_k$, $\varphi_k$) in the entire time domain.

Steps ST101 and ST102 are reliability resetting steps in which the positioning gate determining unit 44b and the reliability setting unit 44c perform positioning gate determination as to whether a measured orientation value is a normal value or an abnormal value by using the positioning gate G for all the orientation measurement values ($\theta_k$, $\varphi_k$) present in the entire time domain, and determine that the orientation measurement value ($\theta_k$, $\varphi_k$) determined as a normal value has high reliability and the orientation measurement value ($\theta_k$, $\varphi_k$) determined as an abnormal value has low reliability.

In step ST103, the time domain selecting unit 44d calculates a variance between the temporary positioning values $x_{m,Ai'}$ of the sensor set $A_{i'}$ determined to have high reliability in the positioning gate determination using the positioning gates G in the entire time domain.

In step ST104, the normal time domain m is selected as the tracking start point time domain $m_s$ on the basis of transition of the variance calculated in the time domain selecting unit 44d.

Here, it is necessary to select, as the tracking start point time domain $m_s$, a time domain with a low abnormality in which it can be determined that the positioning value is close to the true value by the positioning gate determination functioning normally.

In the positioning gate determination, the temporary positioning values $x_{m,Ai'}$ are calculated in order to determine whether the orientation measurement value of the orientation sensor is concentrated on one point or one state vector.

Therefore, in order to check whether the positioning gate normally functions, it is only required to evaluate a variance between the temporary positioning values $x_{m,Ai'}$ of all the sensor sets having high reliability in each time domain m, and the magnitude of the variance can be said to be the abnormality of positioning in the time domain.

When the abnormality in the entire time domain is evaluated, a time domain having a continuously low abnormality or a time domain having the lowest abnormality is selected as the tracking start point time domain $m_s$ from the ease of tracking processing.

The processing proceeds to step ST105 in FIG. 9 when the positioning processing is performed in the time domain adjacent in a direction in which the time elapses with the selected tracking start point time domain $m_s$ as a start point, that is, in the forward direction, and the processing proceeds to step ST205 in FIG. 10 when the positioning processing is performed in the time domain adjacent in a direction in which the time returns with the tracking start point time domain $m_s$ as a start point, that is, in the reverse direction.

The processing may proceed to step ST105, and proceed to step ST205 after the processing up to the time domain M with the tracking start point time domain $m_s$ as a start point is completed, or conversely, the processing may proceed to step ST205, and proceed to step ST105 after the processing up to the time domain 1 with the tracking start point time domain $m_s$ as a start point is completed.

Steps ST105 to ST113 illustrated in FIG. 9 are steps to which the Kalman filter in the time forward direction is applied.

In step ST105, first, the tracking start point time domain $m_s$ is selected as the time domain m in which the positioning processing is performed as a start point.

In step ST106, the positioning processing unit 45 reads the orientation measurement value ($\theta_k$, $\varphi_k$) in the time domain m, the orientation measurement error ($\sigma_{\theta,k}$, $\sigma_{\varphi,k}$) reset by the reliability setting unit 44c accompanying the orientation measurement value ($\theta_k$, $\varphi_k$), the measurement time $t_k$, and the position information ($x^r_k$, $y^r_k$, $z^r_k$) of the orientation sensor 10, and in step ST107, performs positioning processing using the read information to calculate the positioning value $x_m$ for the target 100 in the time domain m.

In step ST108, the accuracy estimating unit 47 estimates the positioning accuracy $R_m$ of the positioning value $x_m$

from the positioning value $x_m$ in the time domain m, the position information $(x^r_k, y^r_k, z^r_k)$ of the orientation sensor 10, and the orientation measurement error $(\sigma_{\theta,k}, \sigma_{\varphi,k})$.

In step ST109, the tracking processing unit 48 performs filter processing in the time forward direction on the time domain m and calculates the smoothed value $x_{m|m}$ and a predicted value $x_{m+1|m}$.

The smoothed value $x_{m|m}$ obtained by calculation is used as an output of the tracking processing at the representative time $t_m$ indicating the estimated position of the target 100.

In step ST110, if the time domain m is the time domain M, the processing is ended, and if the time domain m is not the time domain M, the processing proceeds to step ST111, the time domain m is changed to the next time domain m + 1, and the processing proceeds to step ST112.

In step ST112, the prediction gate determining unit 44f performs prediction gate determination centered on the predicted value $x_{k|m-1}$ read by the prediction information reading unit 44e.

In the prediction gate determination by the prediction gate determining unit 44f in step ST112, prediction gate determination that is abnormal value determination is performed on the orientation measurement value $(\theta_k, \varphi_k)$ in the time domain m updated on the basis of the predicted value $x_{k|m-1}$.

In step ST113, the reliability setting unit 44c resets the orientation measurement error $(\sigma_{\theta,k}, \sigma_{\varphi,k})$ accompanying the orientation measurement value $(\theta_k, \varphi_k)$ determined to be an abnormal value in the prediction gate determination to the orientation measurement error $(\sigma_{\theta,k}, \sigma_{\varphi,k})$ in which the reliability is lowered, resets the orientation measurement error $(\sigma_{\theta,k}, \sigma_{\varphi,k})$ accompanying the orientation measurement value $(\theta_k, \varphi_k)$ determined to be a normal value as it is with high reliability, and proceeds to step ST105.

In step ST105, the time domain m updated in step ST111 is selected, and steps ST106 to ST113 are repeated until the time domain m becomes the time domain M in step ST110.

In this way, the positioning value $x_m$ at the representative time $t_m$ from the tracking start point time domain $m_s$ to the time domain M is obtained.

In the positioning processing in the positioning processing unit 45, the prediction gate determination is performed on the orientation measurement value $(\theta_k, \varphi_k)$ in the time domain m - 1 adjacent to the time domain m, and the reset orientation measurement error $(\sigma_{\theta,k}, \sigma_{\varphi,k})$ is used in all the time domains m from the tracking start point time domain $m_s$ to the time domain M.

Steps ST205 to ST213 illustrated in FIG. 10 are steps to which the Kalman filter in the time reverse direction is applied.

In step ST205, first, the tracking start point time domain $m_s$ is selected as the time domain m in which the positioning processing is performed as a start point.

In step ST206, the positioning processing unit 45 reads the orientation measurement value $(\theta_k, \varphi_k)$ in the time domain m, the orientation measurement error $(\sigma_{\theta,k}, \sigma_{\varphi,k})$ reset by the reliability setting unit 44c accompanying the orientation measurement value $(\theta_k, \varphi_k)$, the measurement time $t_k$, and the position information $(x^r_k, y^r_k, z^r_k)$ of the orientation sensor 10, and in step ST207, performs positioning processing using the read information to calculate the positioning value $x_m$ for the target 100 in the time domain m.

In step ST208, the accuracy estimating unit 47 estimates the positioning accuracy $R_m$ of the positioning value $x_m$ from the positioning value $x_m$ in the time domain m, the position information $(x^r_k, y^r_k, z^r_k)$ of the orientation sensor 10, and the orientation measurement error $(\sigma_{\theta,k}, \sigma_{\varphi,k})$.

In step ST209, the tracking processing unit 48 performs filter processing in the time reverse direction on the time domain m, and calculates the smoothed value $x_{m|m}$ and a predicted value $x_{m-1|m}$. The predicted value $x_{m-1|m}$ is obtained by the above Formula (17), and the smoothed value $x_{m|m}$ is obtained by the above Formula (23).

The smoothed value $x_{m|m}$ obtained by calculation is used as an output of the tracking processing at the representative time $t_m$ indicating the estimated position of the target 100.

In step ST210, if the time domain m is the time domain 1, the processing is ended, and if the time domain m is not the time domain 1, the processing proceeds to step ST211, the time domain m is changed to the next time domain m - 1, and the processing proceeds to step ST212.

In step ST212, the prediction gate determining unit 44f performs prediction gate determination centered on the predicted value $x_{k|m+1}$ read by the prediction information reading unit 44e.

In the prediction gate determination by the prediction gate determining unit 44f in step ST212, prediction gate determination that is abnormal value determination is performed on the orientation measurement value $(\theta_k, \varphi_k)$ in the time domain m updated on the basis of the predicted value $x_{k|m+1}$.

In step ST213, the reliability setting unit 44c resets the orientation measurement error $(\sigma_{\theta,k}, \sigma_{\varphi,k})$ accompanying the orientation measurement value $(\theta_k, \varphi_k)$ determined to be an abnormal value in the prediction gate determination to the orientation measurement error $(\sigma_{\theta,k}, \sigma_{\varphi,k})$ in which the reliability is lowered, resets the orientation measurement error $(\sigma_{\theta,k}, \sigma_{\varphi,k})$ accompanying the orientation measurement value $(\theta_k, \varphi_k)$ determined to be a normal value as it is with high reliability, and proceeds to step ST205.

In step ST205, the time domain m updated in step ST211 is selected, and steps ST206 to ST213 are repeated until the time domain m becomes the time domain 1 in step ST210.

In this way, the positioning value $x_m$ at the representative time $t_m$ from the time domain 1 to the tracking start point time domain $m_s$ is obtained.

In the positioning processing in the positioning processing unit 45, the prediction gate determination is performed on the orientation measurement value $(\theta_k, \varphi_k)$ in the time domain m + 1 adjacent to the time domain m, and the reset orientation measurement error $(\sigma_{\theta,k}, \sigma_{\varphi,k})$ is used in all the time domains m from the tracking start point time domain $m_s$ to the time domain 1.

The output unit 46 connects all the positioning values $x_1$ to $x_M$ at the representative time $t_m$ from the time domain 1 to the time domain M indicating the estimated position of the target 100 obtained by the tracking processing unit 48 in steps ST109 and ST209 in time-series order, and outputs them to the output device 50 as object trajectory information indicating the estimated trajectory of the target 100.

Similarly to the target trajectory estimating device according to the first embodiment, the target trajectory estimating device is implemented by a hardware configuration of a computer illustrated in FIG. 7.

The input interface 403 corresponds to the orientation information reading unit 41 illustrated in FIG. 7, and the output interface 404 corresponds to the output unit 46 illustrated in FIG. 7.

The functions of a part of the time domain dividing unit 43, the abnormal value determining unit 44A, the positioning processing unit 45, the accuracy estimating unit 47, the tracking processing unit 48, and the output unit 46 illustrated in FIG. 7 are implemented by the processor 401 loading a program stored in the memory 402 and operating according to the loaded program.

The target trajectory estimating method of the target trajectory estimating device including steps ST1 to ST14, steps ST101 to 113, and steps ST201 to 213 is performed by the processor 401 executing processing according to a program stored in the memory 402.

That is, the program stored in the memory 402 includes the procedures of: "dividing the time during which each of a plurality of orientation sensors 10 that have received an incoming radio wave from a target 100 has observed the target 100 into a plurality of time domains m in time-series order, and dividing orientation information indicating orientation measurement values $(\theta_k, \varphi_k)$ obtained by each of the plurality of orientation sensors 10 for each of the divided time domains m; selecting a certain number of orientation sensors 10 from the plurality of orientation sensors 10 and classifying the orientation sensors into a plurality of sensor sets, estimating temporary positioning values $x_{m,Ai}$ for each of the divided time domains m in each of the plurality of sensor sets, setting a positioning gate G determined by the obtained temporary positioning values $x_{m,Ai}$, determining that the orientation measurement value $(\theta_k, \varphi_k)$ indicated by orientation information present in the time domain m is present in the set positioning gate G as a normal value, and determining that the orientation measurement value $(\theta_k, \varphi_k)$ indicated by orientation information present in the time domain m is not present in any of the set positioning gates G as an abnormal value; resetting an orientation measurement error $(\sigma_{\theta,k}, \sigma_{\varphi,k})$ accompanying the orientation measurement value $(\theta_k, \varphi_k)$ determined as an abnormal value to a setting for lowering reliability with respect to trajectory estimation of the orientation measurement value $(\theta_k, \varphi_k)$ in each of the plurality of sensor sets; for each of the divided time domains m, estimating a positioning value in each of the time domains m with respect to the target 100 using an orientation measurement value $(\theta_k, \varphi_k)$ indicated by the plurality of pieces of orientation information present in the plurality of time domains m and a reset orientation measurement error $(\sigma_{\theta,k}, \sigma_{\varphi,k})$ accompanying the orientation measurement value $(\theta_k, \varphi_k)$; connecting the estimated positioning values for each of the time domains m in time-series order and outputting object trajectory information indicating a trajectory of the target 100; calculating a variance between the temporary positioning values $x_{m,Ai}$ of the sensor set determined to have high reliability and selecting a tracking start point time domain $m_s$ on the basis of a transition of the calculated variance in the procedure of determining a normal value or an abnormal value; estimating, by a Kalman filter in a time forward direction, positioning accuracy for an estimated positioning value by using an estimated positioning value in a time domain m divided from a tracking start point time domain $m_s$ as a starting point and a reset orientation measurement error $(\sigma_{\theta,k}, \sigma_{\varphi,k})$ accompanying the positioning value; obtaining, by a Kalman filter in a time forward direction, a positioning value including a predicted value and a smoothed value by using an estimated positioning value in a time domain m divided from the tracking start point time domain $m_s$ as a starting point and positioning accuracy corresponding to the positioning value; setting a prediction gate determined by a positioning value including a smoothed value in a time domain m divided from a tracking start point time domain $m_s$ as a starting point and a prediction accuracy estimated from a positioning accuracy corresponding to the positioning value, determining that an orientation measurement value $(\theta_k, \varphi_k)$ indicated by orientation information present in an adjacent time domain m + 1 in a time passage direction is present in the set prediction gate as a normal value, and determining that an orientation measurement value $(\theta_k, \varphi_k)$ indicated by orientation information present in the time domain is not present in any prediction gate as an abnormal value; setting again an orientation measurement error $(\sigma_{\theta,k}, \sigma_{\varphi,k})$ accompanying an orientation measurement value $(\theta_k, \varphi_k)$ determined to be an abnormal value as not being present in any prediction gate among reset orientation measurement errors $(\sigma_{\theta,k}, \sigma_{\varphi,k})$ in a time domain m + 1 immediately after the time domain m divided from the tracking start point time domain $m_s$ as a starting point, to a setting for reducing reliability of trajectory estimation of the orientation measurement value $(\theta_k, \varphi_k)$; estimating positioning accuracy with respect to an estimated positioning value by using an estimated positioning value in each of a time domain m divided from a tracking start point time domain $m_s$ as a starting point and a time domain m - 1 immediately before the time domain m and a reset orientation measurement error $(\sigma_{\theta,k}, \sigma_{\varphi,k})$ accompanying the positioning value by a Kalman filter in a time reverse direction, and obtaining a positioning value including a predicted value and a smoothed value by using an estimated positioning value in the time domain m divided from the tracking start point time domain $m_s$ as a starting point and positioning accuracy corresponding to the positioning value by a Kalman filter in a time reverse direction; setting a prediction gate determined by a position measurement value including a smooth value in a time domain m divided from a tracking start point time domain $m_s$ as a starting point and a prediction accuracy estimated from a position measurement accuracy corresponding to the position measurement value, determining that an orientation measurement value $(\theta_k, \varphi_k)$ indicated by orientation information present in an adjacent time domain m - 1 in a time reverse direction is present in the set prediction gate as a normal value, and determining that an orientation measurement value $(\theta_k, \varphi_k)$ indicated by orientation information present in the time domain is not present in any prediction gate as an abnormal value; resetting an orientation measurement error $(\sigma_{\theta,k}, \sigma_{\varphi,k})$ accompanying an orientation measurement value $(\theta_k, \varphi_k)$ determined to be an abnormal value as not being present in any prediction gate among reset orientation measurement errors $(\sigma_{\theta,k}, \sigma_{\varphi,k})$ in an immediately previous time domain m - 1 divided from a tracking start point time domain $m_s$ as a start point to a setting for lowering reliability for trajectory estimation of the orientation measurement value $(\theta_k, \varphi_k)$; and for each of the divided time domains m, estimating a positioning value in each of the time domains m with respect to a target by using an orientation measurement error $(\sigma_{\theta,k}, \sigma_{\varphi,k})$ in which an orientation measurement value $(\theta_k, \varphi_k)$ indicated by each of the plurality of pieces of orientation information present in the plurality of time domains m and a reset orientation measurement error $(\sigma_{\theta,k}, \sigma_{\varphi,k})$ accompanying the orientation measurement value $(\theta_k, \varphi_k)$ are set again, and connecting positioning values including smoothed values for each of the time domains m in time-series order and outputting object trajectory information indicating a trajectory of the target 100.

As described above, the target trajectory estimating device 40A according to the second embodiment has the same effect as the target trajectory estimating device 40 according to the first embodiment, and further includes the accuracy estimating unit 47 that estimates the positioning accuracy $R_m$ for the positioning value $x_m$ estimated by the positioning processing unit 45 using the orientation measurement error $(\sigma_{\theta,k}, \sigma_{\varphi,k})$ reset by the abnormal value determining unit 44A for each time domain m divided by the time domain dividing unit 43, and the tracking processing unit 48 that obtains a smoothed value and a predicted value by filtering the positioning value $x_m$ using the positioning value $x_m$ estimated by the positioning processing unit 45 and the positioning accuracy $R_m$ estimated by the accuracy estimating unit 47 corresponding to the positioning value $x_m$. The abnormal value determining unit 44A resets the orientation measurement error $(\sigma_{\theta,k}, \sigma_{\varphi,k})$ reset by the predicted value by the tracking processing unit 48, The determination of two different complementary abnormal values results in a more accurate and reliable trajectory estimation of the target 100 using the positioning values.

In particular, trajectory estimation can be performed even when a multipath environment where trajectory estimation is difficult is around a target.

Note that free combinations of the individual embodiments, modifications of any components of the individual embodiments, or omissions of any components in the individual embodiments are possible.

**INDUSTRIAL APPLICABILITY**

The target trajectory estimating device according to the present disclosure is suitable for a target trajectory estimating device used in a target trajectory estimating system that estimates a track of a target of a moving object such as an airplane.

**REFERENCE SIGNS LIST**

10, $10_1$ to $10_N$ and a plurality of orientation sensors, $20_1$ to $20_N$: plurality of orientation measuring units, 30: storage device, 40: target trajectory estimating device, 41: orientation information reading unit, 42: error setting unit, 43: time domain dividing unit, 44: abnormal value determining unit, 44b: positioning gate determining unit, 44c: reliability setting unit, 44f: prediction gate determining unit, 45: positioning processing unit, 46: output unit, 47: accuracy estimating unit, 48: tracking processing unit, 50: output device, 100: target

**Claims**

**1.** A target trajectory estimating device comprising:

an orientation information reading unit to read orientation information indicating an orientation measurement value obtained by each of a plurality of orientation sensors that has received an incoming radio wave from a target, and orientation measurement error information indicating an orientation measurement error accompanying to the orientation measurement value indicated by the orientation information or uniformly set;

a time domain dividing unit to divide time during which each of the plurality of orientation sensors has observed the target into a plurality of time domains in time-series order, and divide the orientation information read by the orientation information reading unit to a plurality of pieces of orientation information respectively corresponding to the plurality of time domains;

an abnormal value determining unit to perform, for each of the plurality of time domains obtained by the time domain dividing unit, determination of whether or not the orientation measurement value indicates an abnormal value on a basis of whether positions indicated by orientation measurement values indicated by the plurality of pieces of orientation information present in the plurality of time domains are concentrated at one point or are concentrated around a state vector including a position and a speed, reset a setting of the orientation measurement error accompanying the orientation measurement value determined to be an abnormal value to a setting for lowering reliability with respect to trajectory estimation of the orientation measurement value, and reset the setting of the orientation measurement error accompanying the orientation measurement value determined not to be the abnormal value to keep the reliability unchanged for the trajectory estimation of the orientation measurement value;

a positioning processing unit to estimate, for each of the plurality of time domains obtained by the time domain dividing unit, a positioning value of the target in each of the plurality of time domains using the orientation measurement value indicated by the plurality of pieces of orientation information present in the plurality of time domains and the orientation measurement error which is reset accompanying the orientation measurement value; and

an output unit to output object trajectory information indicating a trajectory of the target by connecting, in time-series order, the positioning value for each of the plurality of time domains estimated by the positioning processing unit.

2. The target trajectory estimating device according to claim 1, wherein the determination of whether or not the orientation measurement value indicates the abnormal value by the abnormal value determining unit is: to classify the plurality of orientation sensors into a plurality of sensor sets each having a certain number of orientation sensors by selecting the certain number of orientation sensors from the plurality of orientation sensors; perform positioning processing on each of the plurality of sensor sets for each of the plurality of time domains obtained by the time domain dividing unit using the orientation measurement value indicated by the plurality of pieces of orientation information present in the plurality of time domains and the orientation measurement error accompanying the orientation measurement value to obtain a temporary positioning value of the target with respect to each of the plurality of sensor sets; perform estimation of temporary positioning accuracy in the plurality of sensor sets using the temporary positioning value, a position of an orientation sensor corresponding to the temporary positioning value among the plurality of orientation sensors, and the orientation measurement error, evaluate reliability of the orientation measurement value by determining whether the orientation measurement value indicated by each of the plurality of pieces of orientation information present in the plurality of time domains is present in a positioning gate defined by the temporary positioning value and the temporary positioning accuracy; and determine that the orientation measurement value of which the reliability is high is a normal value, and the orientation measurement value of which the reliability is low is an abnormal value.

3. The target trajectory estimating device according to claim 1, wherein the setting of the orientation measurement error accompanying the orientation measurement value determined to be the abnormal value to the setting for lowering the reliability with respect to the trajectory estimation of the orientation measurement value in the abnormal value determining unit is resetting a value indicated by the orientation measurement error accompanying the orientation measurement value determined to be the abnormal value to a parameter value larger than a value indicated by the orientation measurement error accompanying the orientation measurement value determined not to be the abnormal value.

4. The target trajectory estimating device according to claim 2, wherein the estimation of the temporary positioning accuracy in each of the plurality of sensor sets performed by the abnormal value determining unit is performed by calculating a lower limit value (Bayesian Cramer-Rao Boundary (BCRB)) of a theoretically possible variance of the temporary positioning value using a position of the orientation sensor corresponding to the temporary positioning value in the plurality of sensor sets and the orientation measurement error set by an error setting unit.

5. The target trajectory estimating device according to claim 1, wherein
the abnormal value determining unit comprises:

a positioning gate determining unit to classify the plurality of orientation sensors into a plurality of sensor sets each having a certain number of orientation sensors by selecting the certain number of orientation sensors from the plurality of orientation sensors, perform estimation of a temporary positioning value for each of the plurality of time domains obtained by the time domain dividing unit in each of the plurality of sensor sets, set a positioning gate determined by the temporary positioning value, determine that the orientation measurement value indicated by each of the plurality of pieces of orientation information present in the plurality of time domains is a normal value when the orientation measurement value indicated by the orientation information is present in the set positioning gate, and determine that the orientation measurement value indicated by each of the plurality of pieces of orientation information present in the plurality of time domains is an abnormal value when the orientation measurement value indicated by the orientation information is not present in any of the set positioning gates; and

a reliability setting unit to reset the orientation measurement error accompanying the orientation measurement value determined to be an abnormal value by the positioning gate determining unit to a setting for lowering the reliability with respect to the trajectory estimation of the orientation measurement value.

6. The target trajectory estimating device according to claim 5, wherein the estimation of the temporary positioning value performed by the positioning gate determining unit is performed by any one of a method based on weighted least squares estimation and a method based on maximum a posteriori (MAP) estimation.

7. The target trajectory estimating device according to claim 1, wherein in the determination of whether or not the orientation measurement value is an abnormal value performed by the abnormal value determining unit includes: to classify the plurality of orientation sensors into a plurality of sensor sets each having a certain number of orientation sensors by selecting the certain number of orientation sensors from the plurality of orientation sensors; estimate a temporary positioning value and a temporary positioning accuracy for each of the plurality of time domains obtained by the time domain dividing unit in each of the plurality of sensor sets; evaluate the reliability by determining whether the obtained temporary positioning value is present in a positioning gate determined by the obtained temporary positioning value and the temporary positioning accuracy; and determine a magnitude of a variance between the temporary positioning values as an abnormality of positioning in a time domain for each of the plurality of sensor sets of which the evaluated reliability is high.

8. The target trajectory estimating device according to any one of claims 1 to 7, further comprising:

an accuracy estimating unit to estimate positioning accuracy for a positioning value estimated by the positioning processing unit by using the orientation measurement error reset by the abnormal value determining unit for each of the plurality of time domains obtained by the time domain dividing unit; and a tracking processing unit to obtain a smoothed value and a predicted value by filtering the positioning value using the positioning value estimated by the positioning processing unit and the positioning accuracy estimated by the accuracy estimating unit corresponding to the positioning value, wherein
the abnormal value determining unit resets the reset orientation measurement error with the predicted value by the tracking processing unit.

9. The target trajectory estimating device according to claim 8, wherein

the tracking processing unit performs selection of one time domain in which the orientation measurement value determined not to be the abnormal value by the abnormal value determining unit is present, obtains a predicted value and a smoothed value in one time domain after a tracking start point time domain by a Kalman filter in a time forward direction starting from the tracking start point time domain that is the selected one time domain, obtains a predicted value and a smoothed value in one time domain before the tracking start point time domain by a Kalman filter in a time reverse direction starting from the tracking start point time domain, and
the smoothed value for each of the plurality of time domains estimated by the tracking processing unit to be used by the output unit is set as an output of the target trajectory estimating device.

10. The target trajectory estimating device according to claim 9, wherein in the selection of the tracking start point time domain performed by the tracking processing unit, a time domain in which a time during which a variance of the orientation measurement values present in the time domain is small continues or a time domain in which the variance is minimum is selected.

11. The target trajectory estimating device according to claim 9, wherein the selection of the tracking start point time domain performed by the tracking processing unit includes: to classify the plurality of orientation sensors into a plurality of sensor sets each having a certain number of orientation sensors by selecting the certain number of orientation sensors from the plurality of orientation sensors; estimate a temporary positioning value and a temporary positioning accuracy for each of the plurality of time domains obtained by the time domain dividing unit in each of the plurality of sensor sets; evaluate the reliability by determining whether the obtained temporary positioning value is present in a positioning gate determined by the obtained temporary positioning value and the temporary positioning accuracy; determine a magnitude of a variance between the temporary positioning values as an abnormality of positioning in a time domain for each of the plurality of sensor sets of which the evaluated reliability is high; and select a time domain in which the abnormality is continuously lower than a set value or a time domain in which the abnormality is the lowest.

12. The target trajectory estimating device according to claim 9, wherein the resetting of the orientation measurement error reset by the abnormal value determining unit is performed by: setting a prediction gate determined by a predicted value by the tracking processing unit and prediction accuracy estimated from positioning accuracy estimated by the accuracy estimating unit for each of the plurality of time domains obtained by the time domain dividing unit; determining that the orientation measurement value indicated by each of the plurality of pieces of orientation information present in the plurality of time domains is a normal value when the orientation measurement value indicated by the orientation information is present in the set prediction gate; and determining that the orientation measurement value indicated by each of the plurality of pieces of orientation information present in the plurality of time domains is an abnormal value when the orientation measurement value indicated by the orientation information is not present in any of the set prediction gates.

13. The target trajectory estimating device according to claim 5, further comprising:

an accuracy estimating unit to estimate positioning accuracy for a positioning value estimated by the positioning processing unit by using the orientation measurement error reset by the reliability setting unit in the abnormal value determining unit for each of the plurality of time domains obtained by the time domain dividing unit; and
a tracking processing unit to obtain a predicted value and a smoothed value by filtering with a Kalman filter by using the positioning value estimated by the positioning processing unit in each of adjacent time domains among the plurality of time domains obtained by the time domain dividing unit and the positioning accuracy estimated by the accuracy estimating unit accompanying the positioning value, wherein
the abnormal value determining unit includes a prediction gate determining unit to set a prediction gate determined by the predicted value by the tracking processing unit and prediction accuracy estimated from the positioning accuracy estimated by the accuracy estimating unit, determine that the orientation measurement value indicated by each of the plurality of pieces of orientation information present in the plurality of time domains is a normal value when the orientation measurement value indicated by the orientation information is present in the set prediction gate, and determine that the orientation measurement value indicated by each of the plurality of pieces of orientation information present in the plurality of time domains is an abnormal value when the orientation measurement value indicated by the orientation information is not present in any prediction gate,
the reliability setting unit in the abnormal value determining unit again sets, for the orientation measurement error being reset, the orientation measurement error accompanying the orientation measurement value determined to be the abnormal value by the prediction gate determining unit to a setting for lowering reliability with respect to trajectory estimation of the orientation measurement value, and
the smoothed value for each of the plurality of time domains estimated by the tracking processing unit used by the output unit is used as an output of the target trajectory estimating device.

14. A target trajectory estimation method comprising:

by a time domain dividing unit, dividing time during which each of a plurality of orientation sensors that has received an incoming radio wave from a target has observed the target into a plurality of time domains in time-series order, and dividing orientation information indicating an orientation measurement value obtained by each of the plurality of orientation sensors for each of the plurality of time domains;
by a positioning gate determining unit in an abnormal value determining unit, classifying the plurality of orientation sensors into a plurality of sensor sets each having a certain number of orientation sensors by selecting the certain number of orientation sensors from the plurality of orientation sensors, estimating a temporary positioning value for each of the plurality of time domains in each of the plurality of sensor sets, setting a positioning gate determined by the temporary positioning value, determining that the orientation measurement value indicated by each of the plurality of pieces of orientation information present in the plurality of time domains is a normal value when the orientation measurement value indicated by the orientation information is present in the set positioning gate, and

EP 4 715 417 A1

determining that the orientation measurement value indicated by each of the plurality of pieces of orientation information present in the plurality of time domains is an abnormal value when the orientation measurement value indicated by the orientation information is not present in any of the set positioning gates;

by a reliability setting unit in the abnormal value determining unit, resetting an orientation measurement error accompanying the orientation measurement value determined to be the abnormal value to a setting for lowering reliability with respect to trajectory estimation of the orientation measurement value;

by a positioning processing unit, estimating, for each of the plurality of time domains, a positioning value in each of the plurality of time domains with respect to the target by using the orientation measurement value indicated by each of the plurality of pieces of orientation information present in the plurality of time domains and a reset orientation measurement error accompanying the orientation measurement value; and

by an output unit, outputting object trajectory information indicating a trajectory of the target by connecting the estimated positioning values for each of the plurality of time domains in time-series order.

# FIG. 1

Target Trajectory Estimation System

Target Object — 100

Orientation Sensor 1 — $10_1$
Orientation Sensor 2 — $10_2$
Orientation Sensor N — $10_N$

Orientation Measuring Unit — $20_1$
Orientation Measuring Unit — $20_2$
Orientation Measuring Unit — $20_N$

Storage Device — 30
Storage Unit — 31

Target Trajectory Estimation Device — 40

Error Setting Unit — 42

Abnormal Value Determining Unit — 44

Orientation Information Reading Unit — 41

Time Domain Dividing Unit — 43

Orientation Information Reading Unit — 44a

Positioning Gate Determining Unit — 44b

Positioning Processing Unit — 45

Reliability Setting Unit — 44c

Output Unit — 46

Output Device — 50

EP 4 715 417 A1

# FIG. 2

# FIG. 3

# FIG. 4

# FIG. 5

$x_{m,\{2,3,4\}}$

$x_{m,\{1,3,4\}}$

$x_{m,\{1,2,4\}}$

$x_{m,\{1,2,3\}}$

S1

S2

S3

S4

Gc

Gb

Gd

Ga

# FIG. 6

```
                    ( START )

Read Orientation Information of Time Domain m  ─ ST1

              Select Sensor Set  ─ ST2

   Calculate Temporary Positioning Value with  ─ ST3
            Selected Sensor Set

   Estimate Temporary Positioning Accuracy of  ─ ST4
         Temporary Positioning Values

         Create Positioning Gates from
      Temporary Positioning Values and  ─ ST5
      Temporary Positioning Accuracy
```

Select Orientation Measurement Value ─ ST6

ST7
Does Orientation Measurement Value Fall Within Positioning Gate? ── NO

YES
Extract Normal Value Candidate ─ ST8

Is Determination Finished for All Orientation Measurement Values? ─ ST9

NO

YES

ST10
Has Orientation Measurement Values at Large Rate Fallen Within Gate? ── NO

YES
Set Normal Value Candidate to Normal Value in Sensor Set ─ ST11

ST12
Is Orientation Measurement Value Determined as Normal Value of Sensor Set Once or More? ── NO ── ST14
Determine as Abnormal Value in Abnormal Value Determining Unit 44

YES ─ ST13
Determine as Normal Value in Abnormal Value Determining Unit 44

Adjust Reliability by Increasing Orientation Measurement Error ─ ST15

( END )

# FIG. 7

```
                                              ⌐30
                                    ┌──────────────────┐
                                    │  Storage Device  │
                                    └──────────────────┘
   ⌐40
 ┌ ─ ─ ─ ─ ─ ─ ─ ─ ─ ─ ─ ─ ─ ─ ─ ─ ─ ─ ─ ─ ─ ─ ─ ─ ─ ─ ─ ─ ┐
 │ Target Trajectory Estimation Device                       │
 │                                                           │
 │        ⌐401                         ⌐403                   │
 │  ┌──────────────┐            ┌──────────────────┐         │
 │  │   Processor  │            │  Input Interface │         │
 │  └──────────────┘            └──────────────────┘         │
 │         ↕                            ↕          ⌐405       │
 │ ────────────────────────────────────────────────────     │
 │              ↕    ⌐402               ↕    ⌐404            │
 │        ┌──────────────┐        ┌──────────────────┐       │
 │        │    Memory    │        │ Output Interface │       │
 │        └──────────────┘        └──────────────────┘       │
 └ ─ ─ ─ ─ ─ ─ ─ ─ ─ ─ ─ ─ ─ ─ ─ ─ ─ ─ ─ ─ ─ ─ ─ ─ ─ ─ ─ ─ ┘
                                         ↓          ⌐50
                                    ┌──────────────────┐
                                    │   Output Device  │
                                    └──────────────────┘
```

# FIG. 8

# FIG. 9

START

Perform Positioning Gate Determination in Entire Time Domain — ST101

Set Reliability of Abnormal Value — ST102

Calculate Variance between Temporary Positioning Values of Sensor Set Determined to Have High Reliability in Entire Time Domain — ST103

Select Normal Time Domain $m = m_s$ on Basis of Transition of Above Variance — ST104

Select Time Domain m — ST105

ST113 — Set Reliability of Abnormal Value

Read Orientation Information of Time Domain m — ST106

ST112 — Calculate Positioning Value of Time Domain m — ST107

Perform Prediction Gate Determination Centered on Predicted Value $x_{k|m-1}$

Estimate Positioning Accuracy of Time Domain m — ST108

ST111 — $m \rightarrow m+1$

Perform Filter Processing in Time Forward Direction in Time Domain m, and Calculate Smoothed Value and Predicted Value — ST109

Predicted Value

ST110 — $m = M$ ? — NO — YES

Smoothed Value $x_{m|m}$

Output Unit

END

# FIG. 10

START

Perform Positioning Gate Determination in Entire Time Domain — ST101

Set Reliability of Abnormal Value — ST102

Calculate Variance between Temporary Positioning Values of Sensor Set Determined to Have High Reliability in Entire Time Domain — ST103

Select Normal Time Domain $m = m_s$ on Basis of Transition of Above Variance — ST104

Select Time Domain m — ST205

ST213
Set Reliability of Abnormal Value

Read Orientation Information of Time Domain m — ST206

ST212
Perform Prediction Gate Determination Centered on Predicted Value $x_{k|m+1}$

Calculate Positioning Value of Time Domain m — ST207

Estimate Positioning Accuracy of Time Domain m — ST208

ST211
$m \rightarrow m-1$

Perform Filter Processing in Time Reverse Direction in Time Domain m, and Calculate Smoothed Value and Predicted Value — ST209

Predicted Value

ST210
$m = 1$ ?
NO
YES

Smoothed Value $x_{m|m}$

Output Unit

END

## INTERNATIONAL SEARCH REPORT

| International application No. |
| --- |
| **PCT/JP2023/024322** |

**A. CLASSIFICATION OF SUBJECT MATTER**

*G01S 5/04*(2006.01)i; *G01S 13/66*(2006.01)i
FI:  G01S5/04; G01S13/66

According to International Patent Classification (IPC) or to both national classification and IPC

**B. FIELDS SEARCHED**

Minimum documentation searched (classification system followed by classification symbols)

G01S 1/72 - G01S 1/82; G01S 3/00 - G01S 3/86; G01S 5/00 - G01S 5/30; G01S 7/00 - G01S 7/42; G01S 7/52 - G01S 7/64; G01S 13/00 - G01S 15/96; G01S 19/00 - G01S 19/55

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2016-80640 A (KABUSHIKI KAISHA TOSHIBA) 16 May 2016 (2016-05-16) entire text, all drawings | 1-14 |
| A | JP 10-307178 A (MITSUBISHI ELECTRIC CORPORATION) 17 November 1998 (1998-11-17) entire text, all drawings | 1-14 |
| A | JP 2018-25556 A (MITSUBISHI HEAVY INDUSTRIES, LTD.) 15 February 2018 (2018-02-15) entire text, all drawings | 1-14 |
| A | JP 2007-132853 A (TOSHIBA TEC KABUSHIKI KAISHA) 31 May 2007 (2007-05-31) entire text, all drawings | 1-14 |
| A | US 4806936 A (HUGHES AIRCRAFT COMPANY) 21 February 1989 (1989-02-21) entire text, all drawings | 1-14 |

☑ Further documents are listed in the continuation of Box C.  ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **01 August 2023** | **15 August 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
|---|
| **PCT/JP2023/024322** |

### C. DOCUMENTS CONSIDERED TO BE RELEVANT

| Category* | Citation of document, with indication, where appropriate, of the relevant passages | Relevant to claim No. |
|---|---|---|
| A | CN 103954940 A (NAVAL AERONAUTICAL AND ASTRONAUTICAL UNIVERSITY, PLA) 30 July 2014 (2014-07-30) entire text, all drawings | 1-14 |

Form PCT/ISA/210 (second sheet) (January 2015)

**INTERNATIONAL SEARCH REPORT**
Information on patent family members

International application No.

**PCT/JP2023/024322**

| Patent document cited in search report | | | Publication date (day/month/year) | Patent family member(s) | Publication date (day/month/year) |
|---|---|---|---|---|---|
| JP | 2016-80640 | A | 16 May 2016 | (Family: none) | |
| JP | 10-307178 | A | 17 November 1998 | (Family: none) | |
| JP | 2018-25556 | A | 15 February 2018 | (Family: none) | |
| JP | 2007-132853 | A | 31 May 2007 | (Family: none) | |
| US | 4806936 | A | 21 February 1989 | (Family: none) | |
| CN | 103954940 | A | 30 July 2014 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016061705 A

**Non-patent literature cited in the description**

- **L.BADRIASL** ; **S.ARULAMPALAM** ; **A.FINN**. A Novel Batch Bayesian WIV Estimator for Three-Dimensional TMA Using Bearing and Elevation Measurements. *IEEE Transactions on Signal Processing*, 15 February 2018, vol. 66 (4), 1023-1036